(19) Europäisches Patentamt
European Patent Office
Office européen des brevets

(11) EP 3 487 945 B1

(12) **EUROPÄISCHE PATENTSCHRIFT**

(45) Veröffentlichungstag und Bekanntmachung des Hinweises auf die Patenterteilung:
**13.05.2020 Patentblatt 2020/20**

(21) Anmeldenummer: **17737827.0**

(22) Anmeldetag: **13.07.2017**

(51) Int Cl.:
***C09D 175/04*** (2006.01) ***C08J 9/00*** (2006.01)
***C08J 9/30*** (2006.01) ***C08L 75/04*** (2006.01)
***D06N 3/00*** (2006.01) ***B01F 17/00*** (2006.01)
***C07C 69/33*** (2006.01) ***D06N 3/14*** (2006.01)
***C08J 9/28*** (2006.01)

(86) Internationale Anmeldenummer:
**PCT/EP2017/067655**

(87) Internationale Veröffentlichungsnummer:
**WO 2018/015260 (25.01.2018 Gazette 2018/04)**

(54) **VERWENDUNG VON POLYOLESTERN ZUR HERSTELLUNG PORÖSER KUNSTSTOFFBESCHICHTUNGEN**

USE OF POLYOL ESTERS FOR PRODUCING POROUS PLASTIC COATINGS

UTILISATION D'ESTERS DE POLYOLS DESTINES A LA PRODUCTION DE REVETEMENTS PLASTIQUES POREUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.07.2016 EP 16180041**

(43) Veröffentlichungstag der Anmeldung:
**29.05.2019 Patentblatt 2019/22**

(73) Patentinhaber: **Evonik Operations GmbH**
**45128 Essen (DE)**

(72) Erfinder:
- **KLOSTERMANN, Michael**
  **45141 Essen (DE)**
- **GLOS, Martin**
  **46325 Borken (DE)**
- **VON HOF, Jan Marian**
  **44789 Bochum (DE)**
- **DAHL, Verena**
  **51429 Bergisch Gladbach (DE)**
- **EILBRACHT, Christian**
  **44627 Herne (DE)**
- **SPRINGER, Oliver**
  **46485 Wesel (DE)**
- **WENK, Hans Henning**
  **45470 Mülheim an der Ruhr (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 1 283 296** **WO-A1-02/33001**
**US-A- 3 580 855**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 487 945 B1

## Beschreibung

Die vorliegende Erfindung liegt auf dem Gebiet der Kunststoffbeschichtungen, Kunstleder und Polyolester.

Sie betrifft insbesondere die Herstellung poröser Polymerbeschichtungen, bevorzugt poröser Polyurethanbeschichtungen unter Verwendung von Polyglycerinestern als Additive.

Mit Kunststoffen beschichtete Textilien, wie z.B. Kunstleder, bestehen in der Regel aus einem textilen Träger, aufweichen eine poröse Polymerschicht laminiert wird, welche wiederum mit einer Deckschicht bzw. einem Decklack überzogen ist.

Die poröse Polymerschicht weist hierbei vorzugsweise Poren im Mikrometer-Bereich auf, ist luftdurchlässig und damit atmungsaktiv, d.h. durchlässig für Wasserdampf, jedoch wasserbeständig. Bei der porösen Polymerschicht handelt es sich oftmals um poröses Polyurethan. Zurzeit erfolgt die Herstellung poröser Polyurethan-Schichten meist durch ein Koagulationsverfahren, in welchem DMF als Lösemittel verwendet wird. Aufgrund von ökologischen Bedenken gerät diese Herstellmethode jedoch vermehrt in die Kritik, sodass sie nach und nach von anderen, Umwelt-freundlicheren Technologien abgelöst werden sollte. Eine dieser Technologien basiert auf wässrigen Polyurethan-Dispersionen, sogenannten PUDs. Diese bestehen in der Regel aus in Wasser dispergierten Polyurethan-Mikropartikeln, der Festkörpergehalt liegt meist im Bereich von 30 - 60 Gew.-%. Zur Herstellung einer porösen Polyurethan-Schicht werden diese PUDs mechanisch aufgeschäumt, auf einen Träger beschichtet (Schichtdicken typischer Weise zwischen 300 - 2000 μm) und anschließend bei erhöhter Temperatur getrocknet. Während dieses Trocknungsschritts kommt es zu einer Verdampfung des im PUD-System enthaltenen Wassers, wodurch es zu einer Verfilmung der Polyurethan-Partikel kommt. Um die mechanische Festigkeit des Films weiter zu erhöhen können dem PUD-System während des Herstellungsprozesses zusätzlich hydrophile (Poly)Isocyanate zugesetzt werden, welche während des Trocknungsschritts mit freien, an der Oberfläche der Polyurethan-Partikel vorhandenen OH-Resten reagieren können und so zu einer zusätzlichen Vernetzung des PolyurethanFilms führen.

Sowohl die mechanischen als auch die haptischen Eigenschaften so hergestellter PUD-Beschichtungen werden maßgeblich von der Zellstruktur des porösen Polyurethanfilms bestimmt. Weiterhin hat die Zellstruktur des porösen Polyurethanfilms Einfluss auf die Luftdurchlässigkeit bzw. Atmungsaktivität des Materials. Besonders gute Eigenschaften lassen sich hierbei mit möglichst feinen, homogen verteilten Zellen erzielen. Zur Beeinflussung der Zellstruktur während des oben beschrieben Herstellverfahrens ist es üblich dem PUD-System vor bzw. während des mechanischen Aufschäumens Tenside zuzusetzen. Entsprechende Tenside führen zum einen dazu, dass sich während des Aufschäumvorgangs ausreichende Mengen Luft ins PUD-System einschlagen lassen. Zum andern haben die Tenside einen direkten Einfluss auf die Morphologie der so erzeugten Luftblasen. Auch die Stabilität der Luftblasen wird maßgeblich durch die Art des Tensids beeinflusst. Dies ist insbesondere während der Trocknung geschäumter PUD-Beschichtungen wichtig, da sich hierdurch Trocknungsdefekte wie Zellvergröberung oder Trocknungsrisse unterbinden lassen.

Im Stand der Technik werden eine Reihe ionischer und nichtionischer Tenside offenbart, welche zur Herstellung von porösen, PUD-basierten Textil-Verbundmaterialien verwendet werden können. Insbesondere bevorzugt sind hierbei meist anionische Tenside auf Basis von Ammonium-Stearat, siehe z.B. US 2015/0284902 A1 oder US 2006/0079635 A1.

Der Einsatz von Ammonium-Stearat geht jedoch mit vielfältigen Nachteilen einher. Zum einen ist Ammonium-Stearat anfällig gegenüber Kalk-haltigem Wasser. In Polymer-Dispersionen, welche Calcium-Ionen enthalten, können sich hierbei unlösliche Calcium-Seifen bilden, was Ausflockungen bzw. ein Vergelen der Polymerdispersion zur Folge hat. Auf Basis von Ammonium-Stearat hergestelltes Kunstleder hat überdies den Nachteil, dass sich im Kontakt mit Kalk-haltigem Wasser Calcium-Seifen an der Kunstlederoberfläche bilden können, welche als weiße Flecken zu Tage treten. Insbesondere bei dunkel eingefärbtem Kunstleder ist dies unterwünscht. Darüber hinaus weist Ammonium-Stearat den Nachteil auf, dass es im getrockneten Polyurethanfilm eine recht hohe Migrierfähigkeit aufweist. Insbesondere im Kontakt mit Wasser kann hierbei ein als unangenehm empfundener Schmierfilm an der Oberfläche der Kunstlederbeschichtung entstehen. Ein weiterer Nachteil von Ammonium-Stearat ist, dass es in der Regel in Kombination mit anderen Tensiden eingesetzt werden muss, um überhaupt erst eine ausreichende Schaumstabilität erlangen zu können; im Stand der Technik werden hier z.B. Sulfosuccinamate beschrieben. Diese zusätzlichen Komponenten führen in der Anwendung zu einer erhöhten Komplexität.

Aufgabe der vorliegenden Erfindung war es daher, ein effizientes Aufschäumen von PUD-Systemen zu ermöglichen, ohne die im Stand der Technik aufgeführten Nachteile, die mit dem Einsatz von Ammonium-Stearat einhergehen, in Kauf nehmen zu müssen. Überraschender Weise wurde gefunden, dass die Verwendung von Polyglycerinestern die Lösung der genannten Aufgabe ermöglicht.

Gegenstand der vorliegenden Erfindung ist daher die Verwendung von Polyglycerinestern als Additive in wässrigen Polymer-Dispersionen zur Herstellung poröser Polymerbeschichtungen, bevorzugt zur Herstellung von porösen Polyurethanbeschichtungen. Die erfindungsgemäß herzustellende poröse Polymerschicht (d.h. die poröse Polymerbeschichtung) weist hierbei vorzugsweise Poren im Mikrometer-Bereich auf, wobei die mittlere Zellgröße vorzugsweise kleiner 150 μm, bevorzugt kleiner 120 μm, insbesondere bevorzugt kleiner 100 μm, ganz besonders bevorzugt kleiner 75 μm ist. Die bevorzugte Schichtdicke liegt im Bereich von 10 - 10000 μm, vorzugsweise von 50 - 5000 μm, weiter

bevorzugt von 75 - 3000 μm, insbesondere von 100 - 2500 μm.

Der erfindungsgemäße Einsatz der Polyglycerinester hat überraschenderweise mannigfaltige Vorteile. Er ermöglicht ein effizientes Aufschäumen der Polymer-Dispersion. Die so hergestellten Schäume zeichnen sich hierbei durch eine außergewöhnlich feine Porenstruktur mit besonders homogener Zellverteilung aus, was sich wiederum sehr vorteilhaft auf die mechanischen und haptischen Eigenschaften der porösen Polymerbeschichtung auswirkt, welche auf Basis dieser Schäume hergestellt wurden. Des Weiteren kann hierdurch die Luftdurchlässigkeit bzw. Atmungsaktivität der Beschichtung verbessert werden.

Ein weiterer Vorteil der erfindungsgemäß einzusetzenden Polyglycerinester ist, dass sie die Herstellung besonders stabiler Schäume ermöglichen. Dies wirkt sich zum einen vorteilhaft auf deren Verarbeitbarkeit aus. Zum andern hat die erhöhte Schaumstabilität den Vorteil, dass sich während der Trocknung entsprechender Schäume Trocknungsdefekte wie Zellvergröberung oder Trocknungsrisse vermeiden lassen. Darüber hinaus erlaubt die verbesserte Schaumstabilität ein schnelleres Trocknen der Schäume, was prozesstechnische Vorteile sowohl aus ökologischer als auch aus ökonomischer Sicht bietet.

Noch ein Vorteil der erfindungsgemäß einzusetzenden Polyglycerinester ist, dass diese im getrockneten Polymerfilm, insbesondere Polyurethanfilm, nicht mehr migrierfähig sind, besonders dann, wenn dem System während der Trocknung noch zusätzliche (hydrophile) (Poly)Isocyanate zugesetzt werden.

Ein zusätzlicher Vorteil der erfindungsgemäß einzusetzenden Polyolester ist, dass sie zu einem Viskositätsaufbau der geschäumten, nicht-getrockneten Dispersion führen können. Dies wiederum kann sich vorteilhaft auf die Verarbeitbarkeit des Schaums auswirken. Des Weiteren kann hierdurch ggf. auf den Einsatz von zusätzlichen Verdickungsmitteln zur Einstellung der Schaumviskosität verzichtet, bzw. deren Einsatzkonzentration verringert werden, was ökonomische Vorteile mit sich bringt.

Noch ein Vorteil der erfindungsgemäß einzusetzenden Polyglycerinester ist, dass sie wenig bzw. gar nicht anfällig für kalk-haltiges Wasser sind.

Ein weiterer Vorteil der erfindungsgemäß einzusetzenden Polyglycerinester ist, dass sie auch ohne den Einsatz weiterer Tenside zu einer ausreichenden Stabilisierung von Schäumen basierend auf wässrigen Polymerdispersionen führen. Hierdurch kann die Komplexität bei der Zusammenstellung einer geeigneten Schaumformulierung anwenderseitig verringert werden.

Der Begriff der Polyglycerinester umfasst im Sinne der gesamten vorliegenden Erfindung auch deren ionische Derivate, bevorzugt die phosphorylierten und sulfatierten Derivate, insbesondere phosphorylierten Polyolester. Diese Derivate der Polyolester, insbesondere phosphorylierte Polyolester, sind erfindungsgemäß bevorzugt einsetzbare Polyolester. Diese und weitere Derivate der Polyolester werden weiter unten noch näher beschrieben, und sind im Rahmen der Erfindung bevorzugt einsetzbar.

Die Erfindung wird nachfolgend weiter und beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Bei Prozentangaben handelt es sich, wenn nicht anders angegeben, um Angaben in Gewichtsprozent. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

Zur Herstellung der erfindungsgemäßen Polyolester verwendete Polyole sind Polyglycerine.

Zur Herstellung der erfindungsgemäßen Polyolester sind Monocarbonsäuren und/oder polyfunktionelle Di- und/oder Tricarbonsäuren einsetzbar. Bevorzugte, zur Herstellung der erfindungsgemäßen Polyolester verwendete Carbonsäuren entsprechen der allgemeinen Form R-C(O)OH, wobei R ein einwertiger aliphatischer, gesättigter oder ungesättigter Kohlenwasserstoffrest mit 3 bis 39 C-Atomen, bevorzugt 7 bis 21, besonders bevorzugt mit 9 bis 17 Kohlenstoffatomen ist. Insbesondere bevorzugt sind hierbei Carbonsäuren ausgewählt aus Buttersäure (Butansäure), Capronsäure (Hexansäure), Caprylsäure (Octansäure), Caprinsäure (Decansäure), Laurinsäure (Dodecansäure), Myristinsäure (Tetradecansäure), Palmitinsäure (Hexadecansäure), Stearinsäure (Octadecansäure), Arachinsäure (Eicosansäure), Behensäure (Docosansäure), Lignocerinsäure (Tetracosansäure), Palmitölsäure ((Z)-9-Hexadecensäure), Ölsäure ((Z)-9-Hexadecensäure), Elaidinsäure ((E)-9-Octadecensäure), cis-Vaccensäure ((Z)-11-Octadecensäure), Linolsäure ((9Z,12Z)-9,12-Octadecadiensäure), alpha-Linolensäure ((9Z,12Z,15Z)-9,12,15-Octadecatriensäure), gamma-Linolensäure ((6Z,9Z,12Z)-6,9,12-Octadecatriensäure), Di-homo-gamma-Linolensäure ((8Z,11Z,14Z)-8,11,14-Eicosatriensäure), Arachidonsäure ((5Z,8Z,11Z,14Z)-5,8,11,14- Eicosatetraensäure), Erucasäure ((Z)-13-Docosensäure), Nervonsäure ((Z)-15-Tetracosensäure), Rizinolsäure, Hydroxystearinsäure und Undecenylsäure, sowie deren Mischungen, wie z.B. Rapsölsäure, Soyafettsäure, Sonnenblumenfettsäure, Erdnussfettsäure und Tallölfettsäure. Ganz besonders bevorzugt sind Palmitinsäure und Stearinsäure sowie insbesondere die Gemische dieser Substanzen.

Quellen für geeignete Fettsäuren oder Fettsäureester besonders Glyceride können pflanzliche oder tierische Fett, Öle oder Wachse sein. Beispielsweise können verwendet werden: Schweineschmalz, Rindertalg, Gänsefett, Entenfett, Hühnerfett, Pferdefett, Walöl, Fischöl, Palmöl, Olivenöl, Avokadoöl, Samenkernöle, Kokosöl, Palmkernöl, Kakaobutter, Baumwollsamenöl, Kürbiskernöl, Maiskeimöl, Sonnenblumenöl, Weizenkeimöl, Traubenkernöl, Sesamöl, Leinsamenöl, Sojabohnenöl, Erdnussöl, Lupinöl, Rapsöl, Senföl, Rizinusöl, Jatropaöl, Walnussöl, Jojobaöl, Lecithin z.B. auf Basis von Soja, Raps, oder Sonnenblumen, Knochenöl, Klauenöl, Borretschöl, Lanolin, Emuöl, Hirschtalg, Murmeltieröl, Nerzöl, Borretschöl, Distelöl, Hanföl, Kürbisöl, Nachtkerzenöl, Tallöl, sowie Carnaubawachs, Bienenwachs, Candelillawachs, Ouricuriwachs, Zuckerrohrwachs, Retamowachs, Carandaywachs, Raffiawachs, Espartowachs, Alfalfawachs, Bambuswachs, Hempwachs, Douglastannenwachs, Korkwachs, Sisalwachs, Flachswachs, Baumwollwachs, Dammarwachs, Teewachs, Kaffeewachs, Reiswachs, Oleanderwachs, Bienenwachs oder Wollwachs.

Weiterhin kann es vorteilhaft sein, wenn zur Herstellung der erfindungsgemäßen Polyolester polyfunktionelle Di- und Tricarbonsäuren oder zyklische Anhydride von Di- und Tricarbonsäuren eingesetzt werden, wodurch Polyolpolyester zugänglich sind. Tetra- und höherfunktionelle Carbonsäuren bzw. deren Anhydride sind im Sinne dieser Erfindung ebenfalls bevorzugt einsetzbar. Bevorzugt sind hierbei aliphatische, lineare oder verzweigte Di- und/oder Tricarbonsäuren mit einer Kettenlänge von 2 bis 18 C-Atomen und/oder Dimerfettsäuren, die durch katalytische Dimerisierung ungesättigter Fettsäuren mit 12 bis 22 C-Atomen erhalten wurden. Beispiele entsprechender polyfunktioneller Säuren sind Oxalsäure, Malonsäure, Bernsteinsäure, Glutarsäue, Adipinsäure, Pimelinsäure, Korksäure, Suberinsäure, Azelainsäure, Sebacinsäure, Brassylsäure, Thapsiasäure, Tartronsäure, Weinsäure, Äpfelsäure oder Citronensäure. Insbesondere bevorzugt werden polyfunktionelle Di- und Tricarbonsäuren in Kombination mit monofunktionelle Carbonsäuren, wie oben beschrieben, eingesetzt, wodurch anvernetzte Polyolester zugänglich sind.

Ganz besonders bevorzugt sind Polyglycerin-Palmitat und Polyglycerin-Stearat sowie Mischungen dieser Substanzen.

Insbesondere bevorzugt sind hierbei Polyglycerin-ester, welche der allgemeinen Formel 1 entsprechen:

$M_aD_bT_c$ Formel 1

wobei

M = $[C_3H_5(OR')_2O_{1/2}]$
D = $[C_3H_5(OR')_1O_{2/2}]$
T = $[C_3H_5O_{3/2}]$

a = 2 bis 3, insbesondere bevorzugt 2
b = größer 0 bis 5, insbesondere bevorzugt 1 bis 4,
c= 0

wobei die Reste R' unabhängig voneinander gleiche oder verschiedene Reste der Form R"-C(O)- oder H sind,
wobei R" ein einwertiger aliphatischer, gesättigter oder ungesättigter Kohlenwasserstoffrest mit 3 bis 39 C-Atomen, bevorzugt 7 bis 21, besonders bevorzugt mit 9 bis 17 Kohlenstoffatomen ist,
wobei mindestens ein Rest R' einem Rest der Form R"-C(O)- entspricht.

Noch mehr bevorzugt sind Polyglycerinester, welche der allgemeinen Formel 2 entsprechen:

$M_xD_yT_z$ Formel 2

wobei

M = 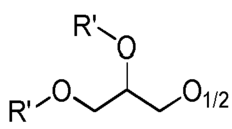

D = 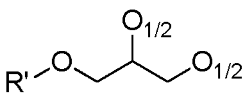 und/oder 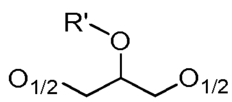

T = 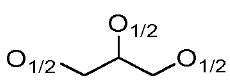

x = 2 bis 3, insbesondere bevorzugt 2,
y = größer 0 bis 5, insbesondere bevorzugt 1 bis 4,
z = größer 0 bis 2, insbesondere bevorzugt 0

unter der Maßgabe, dass mindestens ein Rest R’ ungleich Wasserstoff ist, weiterhin R’ wie unter Formel 1 definiert ist.

Weiter bevorzugt sind Polyglycerinester der allgemeinen Formel 3:

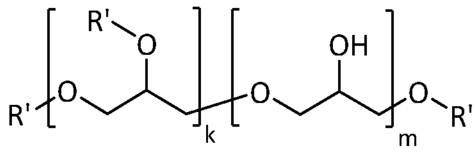
Formel 3

wobei

k = 2 bis 3, insbesondere bevorzugt 2,
m = größer 0 bis 5, insbesondere bevorzugt 1 bis 3,

unter der Maßgabe, dass mindesten einer der Reste R’ ein Rest der Form R"-C(O)- ist und dass die Summe k + m größer null ist und die Fragmente mit den Indices k und m statistisch verteilt sind.

Unter dem Begriff "Polyglycerin" im Sinne der vorliegenden Erfindung ist insbesondere ein Polyglycerin zu verstehen, welches auch Glycerin enthalten kann. Somit ist zur Berechnung von Mengen, Massen und dergleichen gegebenenfalls ein Glycerinanteil mit zu berücksichtigen. Polyglycerine im Sinne der vorliegenden Erfindung sind somit auch Mischungen enthaltend mindestens ein Glycerin-Oligomer und Glycerin. Unter Glycerin-Oligomeren sind jeweils alle entsprechenden Strukturen, z.B. also lineare, verzweigte und zyklische Verbindungen zu verstehen.

Statistische Verteilungen sind blockweise aufgebaut mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Bevorzugt weisen die erfindungsgemäß einsetzbaren Polyglycerinester nicht mehr als 4, mehr bevorzugt nicht mehr als 3, weiter mehr bevorzugt nicht mehr als 2 Reste R’ der Form R"-C(O)- auf. Insbesondere bevorzugt ist der Rest R’ ausgewählt aus der Gruppe der Carbonsäuren, wie oben beschrieben.

In einer ebenfalls bevorzugten Ausführungsform der vorliegenden Erfindung werden solche Polyglycerinester als Additive in wässrigen Polymerdispersionen eingesetzt, die zugänglich sind durch die Umsetzung mindestens eines Polyglycerins mit mindestens einer Carbonsäure wie oben beschrieben. Geeignete Reaktionsbedingungen für diese Umsetzung sind Temperaturen vorzugsweise zwischen 200 und 260 °C sowie vorzugsweise reduzierter Druck im Bereich zwischen 20 - 800 mbar, bevorzugt zwischen 50 und 500 mbar, wodurch eine erleichterte Wasserentfernung möglich ist.

Strukturell lassen sich die Polyolester über nasschemische Kennzahlen wie z.B. ihre Hydroxylzahl, ihr Säurezahl sowie ihre Verseifungszahl charakterisieren. Geeignete Bestimmungsmethoden zur Ermittlung der Hydroxylzahl sind insbesondere solche gemäß DGF C-V 17 a (53), Ph. Eur. 2.5.3 Method A und DIN 53240. Geeignete Methoden zur Bestimmung der Säurezahl sind insbesondere solche gemäß DGF C-V 2, DIN EN ISO 2114, Ph.Eur. 2.5.1, ISO 3682 und ASTM D 974. Geeignete Bestimmungsmethoden zur Ermittlung der Verseifungszahl sind insbesondere solche gemäß DGF C-V 3, DIN EN ISO 3681 und Ph.Eur. 2.5.6.

Es ist erfindungsgemäß bevorzugt und entspricht einer besonders bevorzugten Ausführungsform der Erfindung, wenn zur Herstellung des Polyglycerinesters ein Polyglycerin mit einem mittleren Kondensationsgrad von 1 - 20, bevorzugt von 2 - 10, besonders bevorzugt von 2,5 - 8 verwendet wird. Der mittlere Kondensationsgrad N lässt sich hierbei anhand der OH-Zahl (*OHZ,* in mg KOH/g) des Polyglycerins ermitteln und ist mit dieser verknüpft gemäß:

$$N = \frac{112200 - 18 \cdot OHZ}{75 \cdot OHZ - 56100}$$

Die OH-Zahl des Polyglycerins kann hierbei wie oben beschrieben bestimmt werden. Folglich sind insbesondere solche Polyglycerine zur Herstellung der erfindungsgemäßen Polyglycerinester bevorzugt, welche eine OH-Zahl von 1829 bis 824, besonders bevorzugt von 1352 - 888, insbesondere bevorzugt von 1244 - 920 mg KOH/g aufweisen.

Das eingesetzte Polyglycerin kann hierbei durch verschiedene konventionelle Methoden wie beispielsweise

Polymerisation von Glycidol (z.B. basenkatalysiert), Polymerisation von Epichlorhydrin (beispielsweise in Gegenwart einer Base wie NaOH) oder Polykondensation von Glycerin bereitgestellt werden. Erfindungsgemäß bevorzugt ist die Bereitstellung des Polyglycerins durch die Kondensation von Glycerin, insbesondere in Gegenwart katalytischer Mengen einer Base, insbesondere NaOH oder KOH. Geeignete Reaktionsbedingungen sind Temperaturen zwischen 200-260 °C und reduzierter Druck in einem Bereich zwischen 20 bis 800 mbar, insbesondere zwischen 50 und 500 mbar, wodurch eine erleichterte Wasserentfernung möglich ist. Außerdem sind verschiedene kommerzielle Polyglycerine erhältlich, z.B. von den Firmen Solvay, Innovyn, Daicel und Spiga Nord S.p.A.

Sowohl die Umsetzung von Polyglycerin und Carbonsäuren, insbesondere Fettsäure und/oder Fettsäureestern (z.B. Triglyceriden), wie auch die Bereitstellung des Polyglycerins können nach verbreiteten und dem Fachmann geläufigen Verfahren erfolgen. Entsprechende Verfahren sind z.B. im Römpp - Chemie Lexikon (Thieme-Verlag, 1996) beschrieben.

Es wurde bereits klargestellt, dass der Begriff der Polyolester im Sinne der gesamten vorliegenden Erfindung auch deren ionische Derivate, bevorzugt die phosphorylierten und sulfatierten Derivate, insbesondere phosphorylierte Polyolester umfasst. Phosphorylierte Polyolester sind hierbei durch Umsetzung der Polyolester mit einem Phosphorylierungsreagenz und optionaler, vorzugsweise obligatorischer, anschließender Neutralisation erhältlich (vgl. insbesondere Industrial Applications of Surfactants. II. Preparation and Industrial Applications of Phosphate Esters. Edited by D. R. Karsa, Royal Society of chemistry, Cambridge, 1990). Bevorzugte Phosphorylierungsreagenzien im Sinne dieser Erfindung sind Phosphoroxychlorid, Phosphorpentoxid ($P_4O_{10}$) und besonders bevorzugt Polyphosphorsäure. Der Begriff der phosphorylierten Polyolester deckt im Sinne der gesamten vorliegenden Erfindung auch die partiell phosphorylierten Polyolester ab, und ebenso deckt der Begriff der sulfatierten Polyolester im Sinne der gesamten vorliegenden Erfindung auch die partiell sulfatierten Polyolester ab.

Darüberhinaus können ionische Derivate der Polyolester im Sinne der gesamten vorliegenden Erfindung auch durch Umsetzung der Polyester mit Di- oder Tricarbonsäure bzw. entsprechenden zyklischen Anhydriden, besonders bevorzugt Bernsteinsäureanhydrid, und optionaler, vorzugsweise obligatorischer Neutralisation erhalten werden. Diese Polyolester sind im Sinne der vorliegenden Erfindung besonders bevorzugt einsetzbar.

Darüberhinaus können ionische Derivate der Polyolester im Sinne der gesamten vorliegenden Erfindung auch durch Umsetzung der Polyester mit ungesättigten Di- oder Tricarbonsäure bzw. entsprechenden zyklischen Anhydriden und anschließender Sulfonierung sowie optionaler, vorzugsweise obligatorischer Neutralisation erhalten werden. Auch diese Polyolester sind im Sinne der vorliegenden Erfindung besonders bevorzugt einsetzbar.

Der Begriff der Neutralisation deckt im Sinne der gesamten vorliegenden Erfindung auch eine partielle Neutralisation ab. Zur Neutralisation, umfassend partielle Neutralisation, können übliche Basen eingesetzt werden. Hierzu gehören die wasserlöslichen Metallhydroxide, wie z. B. Barium-, Strontium-, Calcium-, Thallium(I)-hydroxid und vorzugsweise die Hydroxide der Alkalimetalle, die in wäßrigen Lösungen in freie Metall- und Hydroxid-Ionen dissoziieren, insbesondere NaOH und KOH. Hierzu gehören auch die Anhydrobasen, die mit Wasser unter Bildung von Hydroxid-Ionen reagieren, wie z.B. Bariumoxid, Strontiumoxid, Calciumoxid, Lithiumoxid, Silberoxid und Ammoniak. Neben diesen vorgenannten Alkalien sind auch solche festen Stoffe als Basen einsetzbar, die bei der Auflösung in Wasser ebenfalls alkalisch reagieren, ohne (in der festen Verbindung) HO- zu besitzen, hierzu zählen z.B. Amine wie Mono-, Di- und Trialkylamine, wobei es sich auch um funktionalisierte Alkylreste wie beispielsweise bei Amidaminen handeln kann, Mono-, Di- und Trialkanolamine, Mono-, Di- und Triaminoalkylamine und z. B. die Salze schwacher Säuren wie Kaliumcyanid, Kaliumcarbonat, Natriumcarbonat, Trinatriumphosphat usw.

In Bezug auf ionische Derivate der erfindungsgemäßen Polyolester sind ganz besonders phosphorylierte Polyglycerin-Ester bevorzugt. Insbesondere sind phosphoryliertes und neutralisiertes Polyglycerin-Stearat und Polyglycerin-Palmitat sowie Gemische der beiden Substanzen bevorzugte ionische Derivate von Polyolestern im Sinne dieser Erfindung.

Eine besonders bevorzugte Ausführungsform dieser Erfindung sieht den erfindungsgemäßen Einsatz von Polyolestern der Formel 1, 2 und/oder 3, vor, wie zuvor angegeben, mit der zusätzlichen Maßgabe, dass diese (zumindest teilweise) phosphoryliert sind, so dass diese Polyolester der Formel 1, 2 und/oder 3 insbesondere als Rest R' zumindest einen Rest $(R'''O)_2P(O)$- tragen, wobei die Reste R''' unabhängig voneinander Kationen, vorzugsweise $Na^+$, $K^+$ oder $NH_4^+$, oder Ammoniumionen von Mono-, Di- und Trialkylaminen, wobei es sich auch um funktionalisierte Alkylreste wie beispielsweise bei Amidaminen handeln kann, von Mono-, Di- und Trialkanolaminen, von Mono-, Di- und Triaminoalkylaminen oder H oder R''''-O- sind,
wobei R'''' ein einwertiger aliphatischer, gesättigter oder ungesättigter Kohlenwasserstoffrest mit 3 bis 39 C-Atomen, bevorzugt 7 bis 22, besonders bevorzugt mit 9 bis 18 Kohlenstoffatomen oder ein Polyolrest ist.

Bei den sulfatierten Polyolestern sind insbesondere solche bevorzugt, welche durch Umsetzung der Polyolester mit Schwefeltrioxid oder Amidosulfonsäure zugänglich sind. Bevorzugt sind hierbei sulfatierte Polyglycerin-Ester, insbesondere sulfatiertes Polyglycerinstearat und sulfatiertes Polyglycerinpalmitat sowie Mischungen dieser beiden Substanzen. In einer besonders bevorzugten Ausführungsform der vorliegenden Erfindung werden Polyolester nicht pur, sondern in Abmischung mit mindestens einem Co-Tensid als Additive in wässrigen Polymerdispersionen verwendet.

Erfindungsgemäß bevorzugte Co-Tenside sind z.B. Fettsäureamide, Alkylalkoxylate, wie z.B. Fettalkoholethoxylate, Nonylphenolethoxylate, Ethylenoxid-Propylenoxid-Blockcopolymere, Betaine, wie z.B. Amido-Propyl-Betaine, Aminoxide, quaternäre Ammonium-Tenside oder Amphoacetate. Weiterhin kann es sich bei dem Co-Tensid um Silikonbasierte Tenside, wie z.B. Trisiloxan-Tenside oder Polyether-Siloxane handeln.

Insbesondere bevorzugte Co-Tenside sind ionische, bevorzugt anionische Co-Tenside. Bevorzugte anionische Co-Tenside sind hierbei Ammonium und/oder Alkali-Salze von Fettsäure, Alkylsulfate, Alkylethersulfate, Alkylsulfonate, Alkylbenzolsulfonate, Alkylphosphate, Alkyl-Sulfosuccinate, Alkyl-Sulfosuccinamate und Alkylsarcosinate. Insbesondere bevorzugt sind hierbei Alkylsulfate mit 12-20 Kohlenstoffatomen, mehr bevorzugt mit 14-18 Kohlenstoffatomen, noch mehr bevorzugt mit mehr als 16-18 Kohlenstoffatomen. Im Falle von Ammonium und/oder Alkali-Salzen von Fettsäure ist es bevorzugt, wenn diese weniger als 25 Gew.-% Stearat-Salze enthalten, insbesondere frei von Stearat-Salzen sind.

Bei der Verwendung von Co-Tensiden ist es insbesondere bevorzugt, wenn der Anteil an Co-Tensid bezogen auf die Gesamtmenge Polyolester plus Co-Tensid im Bereich von 0,1 - 50 Gew.-%, bevorzugt im Bereich von 0,2 - 40 Gew.-%, mehr bevorzugt im Bereich von 0,5 - 30 Gew.-%, noch mehr bevorzugt im Bereich von 1 - 25 Gew.-% liegt.

Wie bereits beschrieben ist ein Gegenstand der vorliegenden Erfindung die Verwendung von Polyglycerinestern als Additive in wässrigen Polymer-Dispersionen zur Herstellung poröser Polymerbeschichtungen. Die Polymer-Dispersionen sind hierbei bevorzugt ausgewählt aus der Gruppe wässriger Polystyrol-Dispersionen, Polybutadien-Dispersionen, Poly(meth)acrylat-dispersionen Polyvinylester-Dispersionen und Polyurethan-Dispersionen. Der Festkörper-Anteil dieser Dispersionen liegt bevorzugt im Bereich von 20 - 70 Gew.-%, mehr bevorzugt im Bereich von 25 - 65 Gew.-%. Erfindungsgemäß besonders bevorzugt ist die Verwendung von Polyglycerinestern als Additive in wässrigen Polyurethan-Dispersionen. Insbesondere bevorzugt sind hierbei Polyurethan-Dispersionen basierend auf Polyester-, Polyesteramide-, Polycarbonate-, Polyacetal- und Polyether-Polyolen.

Die Einsatzkonzentration der erfindungsgemäßen Polyglycerinester in wässrigen Polymer-Dispersionen liegt bevorzugt im Bereich von 0,2 - 15 Gew.-%, besonders bevorzugt im Bereich von 0,4 - 10 Gew.-%, insbesondere bevorzugt im Bereich von 0,5 - 7.5 Gew.-% bezogen auf das Gesamtgewicht der Dispersion.

Die Polyglycerinester können der wässrigen Dispersion sowohl pur als auch verdünnt in einem geeigneten Lösemittel zugeben werden. Bevorzugte Lösemittel sind hierbei ausgewählt aus Wasser, Propylenglykol, Dipropylenglykol, Polypropylenglykol, Butyldiglykol, Butyltriglykol, Ethylenglykol, Diethylenglykol, Polyethylenglykol, Polyalkylenglykole auf Basis von EO, PO, BO und/oder SO, sowie Mischungen dieser Substanzen. Im Fall von wässrigen Verdünnungen bzw. Abmischungen der erfindungsgemäßen Polyolester kann es vorteilhaft sein, wenn zur Verbesserung der Formulierungseigenschaften (Viskosität, Homogenität etc.) der Abmischung hydrotrope Verbindungen zugesetzt werden. Hydrotrope Verbindungen sind hierbei wasserlösliche organische Verbindungen, welche aus einem hydrophilen und einem hydrophoben Part bestehen, jedoch zu niedermolekular sind, um tensidische Eigenschaften aufzuweisen. Sie führen zu einer Verbesserung der Löslichkeit bzw. der Löslichkeitseigenschaften organischer, insbesondere hydrophober organischer Substanzen in wässrigen Formulierungen. Der Begriff Hydrotrope Verbindungen ist dem Fachmann bekannt. Als Hydrotrope Verbindungen sind im Rahmen der vorliegenden Erfindung Alkali- und Ammonium-Toluolsulfonate, Alkali- und Ammonium-Xylolsulfonate, Alkali- und Ammonium-Naphtalinsulfonate, Alkali- und Ammonium-Cumolsulfonate sowie Phenol-Alkoxylate, insbesondere Phenol-Ethoxylate mit bis zu 6 Alkoxylat-Einheiten bevorzugt.

Neben den erfindungsgemäßen Polyglycerinestern können die wässrigen Polymerdispersionen noch weitere Additive wie z.B. Füllstoffe, organische und anorganische Pigmente, Mattierungsmittel, Stabilisatoren, wie Hydrolyse- oder UV-Stabilisatoren, Antioxidantien, Absorber, Vernetzer, Verlaufsadditive, Verdicker oder ggf. andere Co-Tenside, wie oben beschrieben, enthalten.

Die erfindungsgemäße Verwendung von

(a) Polyglycerinester, insbesondere Polyglycerin-Palmitat und/oder Polyglycerin-Stearat, in Abmischung mit einem anionischen Co-Tensid, vorzugsweise Alkylsulfate, ganz besonders bevorzugt Cetearyl-Sulfat
oder von

(b) Umsetzungsprodukten der Polyglycerinester mit Di- oder Tricarbonsäure bzw. entsprechenden zyklischen Anhydriden, besonders bevorzugt Bernsteinsäureanhydrid, und anschließender Neutralisation, wie insbesondere Alkali-Polyglycerin-Palmitat-Succinat und/oder Alkali-Polyglycerin-Stearat-Succinat,
oder von

(c) phosphoryliertem und neutralisiertem Polyglycerin-Stearat und/oder phosphoryliertem und neutralisiertem Polyglycerin-Palmitat

ist im Sinne dieser Erfindung jeweils ganz besonders bevorzugt.

Vorteilhafterweise werden die erfindungsgemäßen Polyglycerin-Ester, insbesondere die oben genannten Spezies, abgemischt in einem Lösemittel, als Additive in wässrigen Polymerdispersionen verwendet, wobei als Lösemittel

ganz besonders bevorzugt Wasser verwendet wird. Hierbei ist es wiederum bevorzugt, wenn entsprechende Abmischungen 10-50 Gew.-%, mehr bevorzugt 15-40 Gew.-%, noch mehr bevorzugt 20 -30 Gew.-% der erfindungsgemäßen Polyglycerin-Ester enthalten.

Bevorzugt werden die erfindungsgemäßen Polyolester in wässrigen Polymer-Dispersionen als Schaumhilfsmittel bzw. Schaumstabilisatoren zum Aufschäumen der Dispersionen verwendet. Weiterhin können sie jedoch auch als Trocknungshilfsmittel, Verlaufsadditive, Netz-Mittel sowie Rheologieadditive verwendet werden.

Da, wie oben beschrieben, die Polyglycerinester zu einer deutlichen Verbesserung von aus wässrigen Polymerdispersionen hergestellten, porösen Polymerbeschichtungen führen, sind wässrige Polymerdispersionen enthaltend mindestens einen der erfindungsgemäßen Polyglycerinester wie zuvor ausführlich beschrieben, ebenfalls Gegenstand der vorliegenden Erfindung. Noch ein Gegenstand der vorliegenden Erfindung sind aus wässrigen Polymerdispersionen hergestellte poröse Polymerschichten, erhalten unter Einsatz der erfindungsgemäßen Polyglycerinester als Additive, wie zuvor ausführlich beschrieben.

Bevorzugt lassen sich die erfindungsgemäßen porösen Polymerbeschichtungen durch ein Verfahren herstellen umfassend die Schritte

a) Bereitstellen einer Mischung enthaltend eine wässrige Polymerdispersion, wie oben beschrieben, mindestens einen der erfindungsgemäßen Polyglycerinester sowie ggf. weitere Additive
b) Aufschäumen der Mischung zu einem homogenen, feinzelligen Schaum
c) Optional Zugabe mindestens eines Verdickers zur Einstellung der Viskosität des Nasschaums
d) Auftragen einer Beschichtung der geschäumten Polymer-Dispersion auf eine geeigneten Träger
e) Trocknen der Beschichtung

Mit Blick auf bevorzugte Ausgestaltungen, insbesondere mit Blick auf die in dem Verfahren bevorzugt einsetzbaren Polyglycerinester und bevorzugt einsetzbare wässrige Polymerdispersion sei auf die vorangegangene Beschreibung und auch auf die zuvor genannten bevorzugten Ausführungsformen, insbesondere wie in den Ansprüchen 2-8 dargestellt, verwiesen.

Es wird klargestellt, dass die Verfahrensschritte des erfindungsgemäßen Verfahrens wie oben dargestellt keiner festen zeitlichen Abfolge unterworfen sind. So kann beispielsweise der Verfahrensschritt c) bereits zeitgleich mit dem Verfahrensschritt a) ausgeführt werden.

Es entspricht einer bevorzugten Ausführungsform der vorliegenden Erfindung, wenn im Verfahrensschritt b) die wässrige Polymerdispersion durch das Aufbringen hoher Scherkräfte aufgeschäumt wird. Das Aufschäumen kann hierbei unter zu Hilfenahme von dem Fachmann geläufigen Scheraggregaten wie z.B. Dispermaten, Dissolvern, Hansa-Mixern oder Oakes-Mixern erfolgen.

Weiterhin ist er bevorzugt, wenn der am Ende des Verfahrensschritt c) hergestellte Nassschaum eine Viskosität von mindestens 3, bevorzugt von mindestens 5, mehr bevorzugt von mindestens 7,5 noch mehr bevorzugt von mindestens 10 Pa·s aufweist. Die Viskosität des Schaums lässt sich hierbei z.B. mit Hilfe eines Viskosimeters der Firma Brookfield, Modell LVTD ausgerüstet mit einer Spindel LV-4, bestimmen. Entsprechende Messmethoden zur Bestimmung der Nassschaumviskosität sind dem Fachmann bekannt.

Wie oben bereits beschrieben, können dem System zur Einstellung der Nassschaumviskosität zusätzliche Verdicker zugesetzt werden.

Bevorzugt sind die Verdicker, die im Rahmen der Erfindung vorteilhafterweise eingesetzt werden können, hierbei ausgewählt aus der Klasse der Assoziativ-Verdicker. Assoziativverdicker sind hierbei Substanzen, die durch Assoziation an den Oberflächen der in den Polymerdispersionen enthaltenen Partikeln zu einem verdickenden Effekt führen. Der Begriff ist dem Fachmann bekannt. Bevorzugte Assoziativverdicker sind hierbei ausgewählt aus Polyurethanverdickern, hydrophob-modifizierten Polyacrylat-Verdickern, hydrophob-modifizierten Polyether-Verdickern sowie hydrophob modifizerten Celluloseethern. Ganz besonders bevorzugt sind Polyurethanverdicker. Weiterhin ist es im Rahmen der vorliegenden Erfindung bevorzugt, wenn die Konzentration der Verdicker bezogen auf die Gesamtzusammensetzung der Dispersion im Bereich von 0,01 - 10 Gew.-%, mehr bevorzugt im Bereich von 0,05 - 5 Gew.-%, ganz besonders bevorzugt im Bereich von 0,1 - 3 Gew.-% liegt.

Im Rahmen der vorliegenden Erfindung ist es zudem bevorzugt, wenn in Verfahrensschritt d) Beschichtungen der geschäumten Polymerdispersion mit einer Schichtdicke von 10 - 10000 μm, bevorzugt von 50 - 5000 μm, mehr bevorzugt von 75 - 3000 μm noch mehr bevorzugt von 100 - 2500 μm hergestellt werden. Beschichtungen der geschäumten Polymerdispersion können durch dem Fachmann geläufige Methoden, wie z.B. Aufrakeln, hergestellt werden. Hierbei können sowohl direkte also auch indirekte Beschichtungsprozesse (sogenanntes Transfer-Coating) verwendet werden.

Außerdem ist es ihm Rahmen der vorliegenden Erfindung bevorzugt, wenn in Verfahrensschritt e) die Trocknung der geschäumten und beschichteten Polymerdispersion bei erhöhten Temperaturen erfolgt. Erfindungsgemäß bevorzugt sind hierbei Trocknungstemperaturen von min. 50 °C, bevorzugt von 60 °C, mehr bevorzugt von mindestens 70 °C.

Weiterhin ist es möglich die geschäumten und beschichteten Polymerdispersionen mehrstufig bei verschiedenen Temperaturen zu trocknen, um das Auftreten von Trocknungsdefekten zu vermeiden. Entsprechende Trocknungstechniken sind in der Industrie verbreitet und dem Fachmann bekannt.

Wie bereits beschrieben können die Verfahrensschritte c) - e) unter Zuhilfenahme von verbreiteten, dem Fachmann bekannten Methoden erfolgen. Eine Übersicht hierrüber ist beispielsweise in "Coated and laminated Textiles" (Walter Fung, CR-Press, 2002) gegeben.

Im Rahmen der vorliegenden Erfindung sind insbesondere solche porösen Polymerbeschichtungen enthaltend Polyglycerinester bevorzugt, welche eine mittlere Zellgröße kleiner 250 μm, bevorzugt kleiner 150 μm, insbesondere bevorzugt kleiner 100 μm, ganz besonders bevorzugt kleiner 75 μm aufweisen. Die mittlere Zellgröße lässt sich vorzugsweise mikroskopisch, vorzugsweise durch Elektronenmikroskopie bestimmen. Hierfür wird ein Querschnitt der porösen Polymerbeschichtung mittels eines Mikroskops mit einer ausreichenden Vergrößerung betrachtet und die Größe von mindestens 25 Zellen ermittelt. Um eine ausreichende Statistik dieser Auswertemethode zu erhalten sollte die Vergrößerung des Mikroskops vorzugsweise so gewählt sein, dass sich mindestens 10x10 Zellen im Beobachtungsfeld befinden. Die mittlere Zellgröße ergibt sich dann als arithmetisches Mittel der betrachteten Zellen bzw. Zellgrößen. Diese Zellgrößenbestimmung mittels Mikroskopie ist dem Fachmann geläufig.

Die erfindungsgemäßen poröse Polymerschichten (bzw. Polymerbeschichtungen) enthaltend Polyglycerinester können beispielsweise in der Textil-Industrie, z.B. für Kunstleder-Materialien, in der Bau- und Construction-Industrie, in der Elektronik-Industrie, z.B. für geschäumte Abdichtungen, in der Sportindustrie, z.B. zur Herstellung von Sportmatten oder in der Automobil-Industrie verwendet werden.

Ein weiterer Gegenstand der vorliegenden Erfindung sind phosphorylierte Polyolester, erhältlich durch die Veresterung eines Polyglycerins mit mindestens einer Carbonsäure und nachfolgender Umsetzung mit einem Phosphorylierungsreagenz und optionaler, vorzugsweise obligatorischer, anschließender Neutralisation,
wobei das Phosphorylierungsreagenz insbesondere Phosphoroxychlorid, Phosphorpentoxid (P4O10), und/oder Polyphosphorsäure umfasst. Der Begriff der phosphorylierten Polyolester umfasst wiederum, hier und im Folgenden, die teilweise phosphorylierten Polyolester. Der Begriff der Neutralisation umfasst wiederum, hier und im Folgenden, die partielle Neutralisation. Bevorzugte, zur Neutralisation einsetzbare Basen wurden bereits weiter oben aufgeführt.

Bezüglich bevorzugter Ausgestaltungen, insbesondere mit Blick auf bevorzugt einsetzbarer Polyole und Carbonsäuren sei vollumfänglich auf die vorangegangene Beschreibung und dort genannten bevorzugten Ausgestaltungen verwiesen, um unnötige Wiederholungen zu vermeiden.

Besonders bevorzugte phosphorylierte Polyolester sind phosphorylierte und neutralisiertePolyglycerin-Ester, inbesondere phosphoryliertes und neutralisiertes Polyglycerin-Palmitat, phosphoryliertes und neutralisiertes Polyglycerin-Stearat oder eine Mischungen dieser Substanzen.

Zur Herstellung der Polyglycerinester bevorzugt eingesetzte Polyglycerin weisen eine OH-Zahl von 1829 bis 824, besonders bevorzugt von 1352 - 888, insbesondere bevorzugt von 1244 - 920 mg KOH/g auf.

Phosphorylierte Polyolester, vorzugsweise phosphorylierte Polyglycerin-Ester, insbesondere phosphorylierte und neutralisierte Polyglycerin-Ester ermöglichen ein ganz besonders effizientes Aufschäumen von PUD-Systemen, einhergehend mit allen eingangs genannten Vorteilen.

Der vorgenannte Gegenstand, phosphorylierter Polyolester, ist mit großem Vorteil einsetzbar zur Verwirklichung der Gegenstände der Ansprüche 1 bis 8 (also der erfindungsgemäßen Verwendung), des Anspruches 9 (also des erfindungsgemäßen Verfahrens) sowie des Anspruches 10 (also der erfindungsgemäßen Polymerbeschichtung).

Ein weiterer Gegenstand der vorliegenden Erfindung sind sulfatierte Polyglycerin-Ester, vorzugsweise erhältlich durch Umsetzung der Polyglycerin-Ester, mit Schwefeltrioxid oder Amidosulfonsäure. Auch diese ermöglichen ein ganz besonders effizientes Aufschäumen von PUD-Systemen, einhergehend mit allen eingangs genannten Vorteilen. Auch dieser Gegenstand, sulfatierter Polyolester, ist mit großem Vorteil einsetzbar zur Verwirklichung der Gegenstände aller Ansprüche 1 bis 10.

Ein weiterer Gegenstand der Erfindung sind phosphorylierte Polyglycerinester, erhältlich durch

(a) die Veresterung eines Polyglycerins mit mindestens einer Carbonsäure und
(b) nachfolgender Umsetzung mit einem Phosphorylierungsreagenz und
(c) optionaler, vorzugsweise obligatorischer, anschließender Neutralisation,

wobei das Phosphorylierungsreagenz insbesondere Phosphoroxychlorid, Phosphorpentoxid ($P_4O_{10}$), und/oder Polyphosphorsäure umfasst.

Es entspricht einer bevorzugten Ausführungsform der Erfindung, wenn der phosphorylierte Polyolester sich dadurch auszeichnet, dass es ein phosphorylierter und neutralisierter Polyglycerin-Ester, inbesondere ein phosphoryliertes und neutralisiertes Polyglycerin-Palmitat, ein phosphoryliertes und neutralisiertes Polyglycerin-Stearat oder eine Mischungen dieser Substanzen ist.

Wenn das zur Herstellung der Polyglycerinester eingesetzte Polyglycerin eine OH-Zahl von 1829 bis 824,

besonders bevorzugt von 1352 - 888, insbesondere bevorzugt von 1244 - 920 mg KOH/g aufweist, liegt wiederum eine bevorzugte Ausführungsform der Erfindung vor.

Mit Blick auf weitere bevorzugte Ausgestaltungen sei auf die vorangegangene Beschreibung verwiesen.

Ein weiterer Gegenstand der Erfindung ist ein phosphorylierter Polyglycerin-Ester, welcher der allgemeinen Formel 1a entspricht:

$$M_aD_bT_c \qquad \text{Formel 1a}$$

wobei

M = $[C_3H_5(OR')_2O_{1/2}]$
D = $[C_3H_5(OR')_1O_{2/2}]$
T = $[C_3H_5O_{3/2}]$

a = 2 bis 3, insbesondere bevorzugt 2
b = größer 0 bis 5, insbesondere bevorzugt 1 bis 4,
c= 0

wobei die Reste R' unabhängig voneinander gleiche oder verschiedene Reste der Form $(R'''O)_2P(O)$-, R"-C(O)- oder H sind,
wobei R" ein einwertiger aliphatischer, gesättigter oder ungesättigter Kohlenwasserstoffrest mit 3 bis 39 C-Atomen, bevorzugt 7 bis 21, besonders bevorzugt mit 9 bis 17 Kohlenstoffatomen ist,
wobei mindestens ein Rest R' einem Rest der Form R"-C(O)- entspricht und wobei mindestens ein Rest R' einem Rest der Form $(R'''O)_2P(O)$- entspricht,
wobei die Reste R''' unabhängig voneinander Kationen, vorzugsweise $Na^+$, $K^+$ oder $NH_4^+$, oder Ammoniumionen von Mono-, Di- und Trialkylaminen, wobei es sich auch um funktionalisierte Alkylreste wie beispielsweise bei Amidaminen handeln kann, von Mono-, Di- und Trialkanolaminen, von Mono-, Di- und Triaminoalkylaminen oder H oder R''''-O- sind, wobei R'''' ein einwertiger aliphatischer, gesättigter oder ungesättigter Kohlenwasserstoffrest mit 3 bis 39 C-Atomen, bevorzugt 7 bis 22, besonders bevorzugt mit 9 bis 18 Kohlenstoffatomen oder ein Polyolrest ist,
und/oder der allgemeinen Formel 2a entsprechen:

$$M_xD_yT_z \qquad \text{Formel 2a}$$

wobei

M = 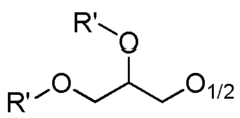

D = 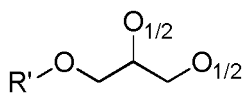 und/oder 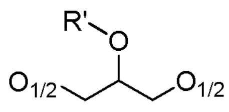

T = 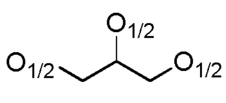

x = 2 bis 3, insbesondere bevorzugt 2,
y = größer 0 bis 5, insbesondere bevorzugt 1 bis 4,
z = größer 0 bis 2, insbesondere bevorzugt 0

unter der Maßgabe, dass mindestens ein Rest R' einem Rest der Form R"-C(O)- entspricht und mindestens ein Rest R' einem Rest der Form $(R'''O)_2P(O)$- entspricht, weiterhin R' wie zuvor definiert, und/oder der allgemeinen Formel 3a entsprechen:

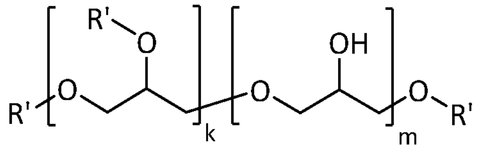

Formel 3a

wobei

k = 2 bis 3, insbesondere bevorzugt 2,
m = größer 0 bis 5, insbesondere bevorzugt 1 bis 3,

unter der Maßgabe, dass mindesten ein Rest R' einem Rest der Form R''-C(O)- entspricht und mindestens ein Rest R' einem Rest der Form $(R'''O)_2P(O)$- entspricht und dass die Summe k + m größer null ist und die Fragmente mit den Indices k und m statistisch verteilt sind. Mit Blick auf bevorzugte Ausgestaltungen sei auf die vorangegangene Beschreibung verwiesen.

**Beispiele**

Substanzen:

Impranil® DLU: aliphatische Polycarbonatester-Polyether Polyurethandispersion von der Firma Covestro
Impranil® DL 1537: aliphatische Polyester-Polyurethandispersionen von der Firma Covestro
Impranil® DL 1554: aliphatische Polyester-Polyurethandispersionen von der Firma Covestro
Impranil® RSC 1380: Polyester-Polyurethandispersion der Firma Covestro
Bayhydur® 3100: hydrophiles, aliphatisches Polyisocyanat der Firma Covestro
Stokal® STA: Ammonium-Stearat (ca. 30 %ig in $H_2O$) von der Firma Bozetto
Stokal® SR: Talkfett-basiertes Natrium-Sulfosuccinamat (ca. 35 %ig in $H_2O$) von der Firma Bozetto Tego® Viscoplus 3030: polyurethan-basierter Assoziativ-Verdicker der Firma Evonik Industries AG.

Viskositätsmessungen:

Alle Viskositätsmessungen wurden mit einem Viskosimeter der Firma Brookfield, Typ LVTD ausgerüstet mit Spindel LV-4, bei einer konstanten Rotationsgeschwindigkeit von 12 rpm durchgeführt. Für die Viskositätsmessungen wurden die Proben in eine 100 ml Glas gefüllt, in welches die Messspindel eintauchte. Es wurde stets gewartet, bis das Viskosimeter einen konstanten Messwert anzeigte.

Bespiel 1: Synthese Polyglycerin-Stearat

Ein Gemisch aus Polyglycerin (OHZ = 1124 mg KOH/g, 103.3 g, 0.431 mol) und technischer Stearinsäure (Palmitinsäure:Stearinsäure = 50:50; 155.0 g, 0.574 mol) wurde unter Rühren auf 240 °C erhitzt und das entstehende Wasser so lange kontinuierlich abdestilliert, bis eine Säurezahl von 1.0 mg KOH/g erreicht war. Das erhaltene Polyglycerinstearat wies folgende Kennzahlen auf: Säurezahl: 1.0 mg KOH/g; Verseifungszahl; 129 mg KOH/g; Hydroxylzahl: 345 mg KOH/g.

Beispiel 2: Synthese von phosphoryliertem Polyglycerin-Stearat

Ein Gemisch aus einem Polyglycerin-Stearat (97.62 g) erhalten wie in Beispiel 1 beschrieben und Polyphosphorsäure (115% $H_3PO_4$, 2.38 g) wurde für 4 h unter Rühren auf 80 °C erhitzt. Danach wies das Gemisch eine Säurezahl von 27.6 mg KOH/g auf. Anschließend wurde bei 80 °C 45%ige wässrige KOH-Lösung (9.77 g) zugegeben und für weitere 30 min bei 80 °C gerührt. Das Gemisch wies eine Säurezahl von 1.3 mg KOH/g auf.

Beispiel 3: Synthese von Kalium-Polyglycerin-Stearat-Succinat

Polyglycerin-Stearat (300 g) erhalten wie in Beispiel 1 beschrieben wurde auf 80 °C erhitzt und unter Rühren wurde innerhalb von 1 h Bernsteinsäureanhydrid (9.15 g) portionsweise zugegeben. Das Gemisch wurde für weitere 2 h bei 80 °C gerührt bis eine Säurezahl von 19.8 mg KOH/g erreicht war. Anschließend wurden 12.90 g einer 45%igen wässrigen KOH-Lösung zugegeben und das Gemisch für weitere 15 min gerührt. Das erhaltene Kalium-Polyglycerin-Stearat-Succinat wies folgende Kennzahlen auf: Säurezahl: 8.8 mg KOH/g.

Beispiel 4: Formulierung und Abmischung erfindungsgemäßer Tenside

Die erfindungsgemäßen Tenside aus Bespiel 1 und 2 wurden gemäß der in Tabelle 1 aufgeführten Zusammensetzungen abgemischt und anschließend bei 80 °C homogenisiert:

**Tabelle 1:** Zusammensetzung von im Folgenden verwendeten Tensidabmischungen

| | **Tensid 1** | **Tensid 2** | **Tensid 3** |
|---|---|---|---|
| Polyglycerinsterat (aus Beispiel 1) | 19,7 g | --- | |
| Phosphoryliertes Polyglycerinstearat (aus Beispiel 2) | --- | 21,3 g | |
| Kalium-Polyglycerin-Stearat-Succinat (aus Beispiel 3) | --- | --- | 21,3 g |
| Cetearyl-Sulfat | 1,6 g | --- | --- |
| Wasser | 59,1 g | 59,1 g | 56,1 g |
| Propylenglykol | 6,25 g | 6,25 g | 6,25 g |

Beispiel 5:

150 g der Dispersion Impranil® DLU wurden in einem 500 ml Plastikbecher vorgelegt und mit Hilfe eines Dissolvers der Firma Pendraulik ausgestattet mit einer Dissolverscheibe (Ø = 6 cm) für 3 min bei 500 rpm gerührt. Während dieser Zeit wurde mit Hilfe einer Spritze langsam das Tensid zugegeben. Die genauen Zusammensetzungen der Proben sind in Tabelle 2 aufgeführt.

Zum Aufschäumen der Mischungen wurde die Schergeschwindigkeit anschließend auf 2000 rpm erhöht, wobei darauf geachtet wurde, dass die Dissolverscheibe stets soweit in die Dispersion eintauchte, dass sich eine ordentliche Trombe bildete. Bei dieser Geschwindigkeit wurden die Mischungen auf ein Volumen von ca. 425 ml geschäumt. Die hierfür benötigte Scherdauer ist ebenfalls in Tabelle 2 vermerkt. Danach wurde die Schergeschwindigkeit auf 1000 rpm reduziert; mit Hilfe einer Spritze wurde Tego® Viscoplus 3030 zugesetzt und erneut für 15 min geschert. Die Dissolverscheibe wurde in diesem Schritt so tief in die Mischungen eingetaucht, sodass keine weitere Luft ins System eingetragen wurde, jedoch das komplette Volumen noch in Bewegung war.

**Tabelle 2:** Übersicht der in Beispiel 4 hergestellten Schäume

| | **Probe 1** | **Probe 2** | **Probe 3** | **Probe 4** |
|---|---|---|---|---|
| Impranil® DLU | 150 g | 150 g | 150 g | 150 g |
| Stokal® STA | 2,4 g | | | |
| Stokal® SR | 1,8 g | | | |
| Tensid 1 | | 4 g | | |
| Tensid 2 | | | 4 g | |
| | | | | 4 g |
| Tego® Viscoplus 3030 | 0,7 g | 0,2 g | 0,2 g | 0,2 g |
| Scherdauer | 3 min | 4 min | 3,5 min | 3 min |
| Schaumviskosität | 14 Pa s | 17,5 Pa s | 16 Pa s | 17 Pa s |
| Zellgröße Endschaum | ca. 120 µm | ca. 50 µm | ca. 50 µm | ca 50 µm |

In allen Fällen wurden am Ende dieses Aufschäumvorgangs feine, homogene Schäume erhalten. Auffällig war, dass die Schäume, welche mit den erfindungsgemäßen Tensiden 1 -3 hergestellt wurden, trotz geringerer Verdickerkonzentration eine leicht höhere Viskosität aufwiesen (siehe Tabelle 2). Die Schäume wurde mit Hilfe eines Filmziehgeräts (Typ AB3220 der Firma TQC) ausgerüstet mit einem Kastenrakel (Rakelstärke = 800 µm) auf eine silikonisierte Polyesterfolie gecoatet und anschließend für 10 min. bei 60 °C sowie für weitere 5 min bei 120 °C getrocknet.

Verglichen mit Probe 1 zeichneten sich die getrockneten erfindungsgemäßen Proben 2 - 4 durch eine homogenere makroskopische Erscheinung sowie durch einen samtigeren Griff aus. Die Bewertung der Zellstruktur der getrockneten Proben erfolgte mittels Rasterelektronenmikroskopie. Hierbei konnte im Falle der Vergleichsprobe 1 eine mittlere Zellgröße von ca. 120 µm festgestellt werden, während die erfindungsgemäßen Proben 2 und 3 eine deutlich feinere Zellgröße von ca. 50 µm aufwiesen.

Beispiel 6:

Die in Tabelle 2 aufgeführten Zusammensetzungen wurden analog dem in Beispiel 4 beschriebenen Verfahren aufgeschäumt und mit Hilfe eines Kastenrakels (Rakelstärke = 800 µm) auf eine silikonisierte Polyesterfolie gecoatet. Die Trocknung der Proben erfolgte diesmal jedoch lediglich für 5 min. bei 90 °C sowie für 3 min bei 120 °C. Hierbei konnte beobachtet werden, dass die Vergleichsprobe 1 nach dem Trocknen deutliche Defekte (Trocknungsrisse) aufwies, während sich die erfindungsgemäßen Proben 2 - 4 trotz der verkürzten, schärferen Trocknungsbedingungen defektfrei trocknen ließen.

Zusätzlich wurde von allen Proben eine Beschichtung mit einer Rakelstärke von 2000 µm hergestellt. Diese wurde für 10 min bei 60 °C, für 10 min bei 90 °C sowie für 10 min bei 120 °C getrocknet. Auch hier ließen sich die Proben 2 - 4, welche die erfindungsgemäßen Tenside enthielten, defektfrei trocknen, während die Vergleichsprobe deutliche Trocknungsrisse 1 aufwies.

Beispiel 7:

150 g Polyurethan-Dispersion, sowie ggf. 3 g des Polyisocyanates Bayhydur® 3100 wurden in einem 500 ml Plastikgefäß vorgelegt und anschließend, wie in Beispiel 4 beschrieben, aufgeschäumt, homogenisiert, auf eine silikonisierte Polyesterfolie gecoatet (Rakelstärke 800 µm) und getrocknet. Die Tabellen 3 und 4 geben einen Überblickt über die jeweilige Zusammensetzung der Proben. Alle Proben zeichneten sich nach dem Trocknen durch eine homogeneres Erscheinungsbild aus, als die in Bespiel 4 zum Vergleich hergestellt Probe 1. Rasterelektronenmikroskopische Untersuchungen der getrockneten Schäume zeigten, dass die Zellgröße in allen Fällen im Bereich von 40 - 60 µm lag. Diese Versuche beweisen den vielfältigen Einsatz der erfindungsgemäßen Polyglycerinester in einer Reihe verschiedener Polyurethan-Dispersionen.

Zusätzlich wurde von allen Proben nach dem Aufschäumen ein Rakelaufzug mit einer Schichtdicke von 2000 µm hergestellt. Diese Beschichtungen wurden für 10 min bei 60 °C, für 10 min bei 90 °C sowie für 10 min bei 120 °C getrocknet. In allen Fällen ließen sich die Schäume ohne Defekte trocknen und es wurden homogene Proben mit einem samtigen Griff erhalten. Rasterelektronenmikroskopische Untersuchungen ergaben, dass auch hier die Zellgröße aller Proben im Bereich von 40 - 60 µm lag.

**Tabelle 3:** Übersicht der in Beispiel 6 hergestellten Schäume

| | Probe 4 | Probe 5 | Probe 6 | Probe 7 | Probe 8 | Probe 9 |
|---|---|---|---|---|---|---|
| Impranil® DL 1537 | 75 g | | | 75 g | | |
| Impranil® DLU | 75 g | | | 75 g | | |
| Impranil® DL 1554 | | 150 g | | | 150 g | |
| Impranil® RSC 1380 | | | 150 g | | | 150 g |
| Bayhydur® 3100 | | | | 3 g | 3 g | 3 g |
| Tensid 1 | 4 g | 4 g | 4 g | 4 g | 4g | 4 g |
| Tego® Viscoplus 3030 | 0,2 g | 0,1 g | 0,2 g | 0,2 g | 0,1 g | 0,2 g |
| Schaumviskosität | 15,7 Pa s | 21,8 Pa s | 16,3 Pa s | 15,5 Pa s | 21,5 Pa s | 16,0 Pa s |

**Tabelle 4:** Übersicht der in Beispiel 6 hergestellten Schäume

| | Probe 10 | Probe 11 | Probe 12 | Probe 13 | Probe 14 | Probe 15 |
|---|---|---|---|---|---|---|
| Impranil® DL 1537 | 75 g | | | 75 g | | |
| Impranil® DLU | 75 g | | | 75 g | | |
| Impranil® DL 1554 | | 150 g | | | 150 g | |
| Impranil® RSC 1380 | | | 150 g | | | 150 g |
| Bayhydur® 3100 | | | | 3 g | 3 g | 3 g |
| Tensid 2 | 4 g | 4 g | 4 g | 4 g | 4g | 4 g |
| Tego® Viscoplus 3030 | 0,2 g | 0,1 g | 0,1 g | 0,2 g | 0,1 g | 0,1 g |
| Schaumviskosität | 15,1 Pa s | 21,1 Pa s | 15,5 Pa s | 14,7 | 20,2 Pa s | 14,3 Pa s |

**Patentansprüche**

1. Verwendung von Polyolestern als Additive in wässrigen Polymer-Dispersionen zur Herstellung poröser Polymerbeschichtungen, bevorzugt poröser Polyurethanbeschichtungen,
wobei die Polyolester erhältlich sind durch die Veresterung eines Polyglycerins mit mindestens einer Carbonsäure.

2. Verwendung nach 1, **dadurch gekennzeichnet, dass** die Carbonsäure der allgemeinen Formel R-C(O)OH entspricht, wobei R ein einwertiger aliphatischer, gesättigter oder ungesättigter Kohlenwasserstoffrest mit 3 bis 39 C-Atomen, bevorzugt 7 bis 21, besonders bevorzugt mit 9 bis 17 Kohlenstoffatomen ist,
und wobei bevorzugte Carbonsäuren ausgewählt sind aus Buttersäure (Butansäure), Capronsäure (Hexansäure), Caprylsäure (Octansäure), Caprinsäure (Decansäure), Laurinsäure (Dodecansäure), Myristinsäure (Tetradecansäure), Palmitinsäure (Hexadecansäure), Stearinsäure (Octadecansäure), Arachinsäure (Eicosansäure), Behensäure (Docosansäure), Lignocerinsäure (Tetracosansäure), Palmitölsäure ((Z)-9-Hexadecensäure), Ölsäure ((Z)-9-Hexadecensäure), Elaidinsäure ((E)-9-Octadecensäure), cis-Vaccensäure ((Z)-11-Octadecensäure), Linolsäure ((9Z,12Z)-9,12-Octadecadiensäure), alpha-Linolensäure ((9Z,12Z,15Z)-9,12,15-Octadecatriensäure), gamma-Linolensäure ((6Z,9Z,12Z)-6,9,12-Octadecatriensäure), Di-homo-gamma-Linolensäure ((8Z,11Z,14Z)-8,11,14-Eicosatriensäure), Arachidonsäure ((5Z,8Z,11Z,14Z)-5,8,11,14-Eicosatetraensäure), Erucasäure ((Z)-13-Docosensäure), Nervonsäure ((Z)-15-Tetracosensäure), Rizinolsäure, Hydroxystearinsäure und Undecenylsäure, sowie deren Mischungen, wie z.B. Rapsölsäure, Soyafettsäure, Sonnenblumenfettsäure, Erdnussfettsäure und/oder Tallölfettsäure,
wobei Palmitinsäure und Stearinsäure sowie Mischungen dieser beiden Substanzen ganz besonders bevorzugt sind,
und/oder dass eine polyfunktionelle Di- und/oder Tricarbonsäure eingesetzt wird, bevorzugt aliphatische, lineare oder verzweigte Di- und/oder Tricarbonsäuren mit einer Kettenlänge von 2 bis 18 C-Atomen und/oder Dimerfettsäuren, die durch katalytische Dimerisierung ungesättigter Fettsäuren mit 12 bis 22 C-Atomen erhalten wurden,
und/oder dass eine Mischung aus Carbonsäure der allgemeinen Formel R-C(O)OH, wie zuvor genannt, und polyfunktioneller Di- und/oder Tricarbonsäure eingesetzt wird.

3. Verwendung nach einem der Ansprüche 1 oder 2, **dadurch gekennzeichnet, dass** die eingesetzten Polyolester solche umfassen, die ausgewählt sind aus der Gruppe der Polyglycerinester, welche der allgemeinen Formel 1 entsprechen:

$M_aD_bT_c$ Formel 1

wobei

$M = [C_3H_5(OR')_2O_{1/2}]$
$D = [C_3H_5(OR')_1O_{2/2}]$
$T = [C_3H_5O_{3/2}]$
a = 2 bis 3, insbesondere bevorzugt 2
b = größer 0 bis 5, insbesondere bevorzugt 1 bis 4,
c= 0

wobei die Reste R' unabhängig voneinander gleiche oder verschiedene Reste der Form R"-C(O)- oder H sind, wobei R" ein einwertiger aliphatischer, gesättigter oder ungesättigter Kohlenwasserstoffrest mit 3 bis 39 C-Atomen, bevorzugt 7 bis 21, besonders bevorzugt mit 9 bis 17 Kohlenstoffatomen ist,
wobei mindestens ein Rest R' einem Rest der Form R"-C(O)- entspricht,
und/oder der allgemeinen Formel 2 entsprechen:

$M_xD_yT_z$ Formel 2

wobei

M = 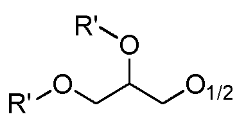

D = 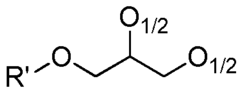 und/oder 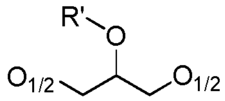

T = 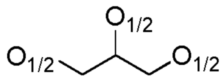

x = 2 bis 3, insbesondere bevorzugt 2,
y = größer 0 bis 5, insbesondere bevorzugt 1 bis 4,
z = größer 0 bis 2, insbesondere bevorzugt 0

unter der Maßgabe, dass mindestens ein Rest R' ungleich Wasserstoff ist, weiterhin R' wie zuvor definiert, und/oder der allgemeinen Formel 3 entsprechen:

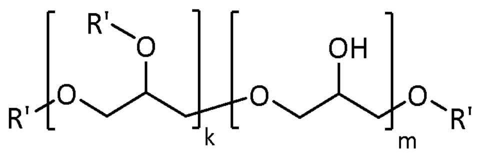

Formel 3

wobei

k = 2 bis 3, insbesondere bevorzugt 2,
m = größer 0 bis 5, insbesondere bevorzugt 1 bis 3,

unter der Maßgabe, dass mindesten einer der Reste R' ein Rest der Form R''-C(O)-ist, weiterhin R' wie zuvor definiert, und dass die Summe k + m größer null ist und die Fragmente mit den Indices k und m statistisch verteilt sind.

4. Verwendung nach Anspruch 3, **dadurch gekennzeichnet, dass** die Polyolester der Formel 1, 2 und/oder 3 phosphoryliert sind, insbesondere als Rest R' zumindest einen Rest $(R'''O)_2P(O)$- tragen, wobei die Reste R''' unabhängig voneinander Kationen, vorzugsweise $Na^+$, $K^+$ oder $NH_4^+$, oder Ammoniumionen von Mono-, Di- und Trialkylaminen, wobei es sich auch um funktionalisierte Alkylreste wie beispielsweise bei Amidaminen handeln kann, von Mono-, Di- und Trialkanolaminen, von Mono-, Di- und Triaminoalkylaminen oder H oder R''''-O-sind,
wobei R'''' ein einwertiger aliphatischer, gesättigter oder ungesättigter Kohlenwasserstoffrest mit 3 bis 39 C-Atomen, bevorzugt 7 bis 22, besonders bevorzugt mit 9 bis 18 Kohlenstoffatomen oder ein Polyolrest ist.

5. Verwendung nach einem der Ansprüche 1 bis 4, **dadurch gekennzeichnet, dass** die Polyolester in Abmischung mit mindestens einem ionischen, bevorzugt anionischen Co-Tensid als Additive in wässrigen Polymerdispersionen verwendet werden,
wobei bevorzugte ionische Co-Tenside die Ammonium- und Alkali-Salze von Fettsäure, Alkylsulfate, Alkylethersulfate, Alkylsulfonate, Alkylbenzolsulfonate, Alkylphosphate, Alkyl-Sulfosuccinate, Alkyl-Sulfosuccinamate und Alkylsarcosinate sind,
wobei insbesondere Alkylsulfate mit 12-20 Kohlenstoffatomen bevorzugt sind, weiter bevorzugt mit 14-18 Kohlenstoffatomen, noch mehr bevorzugt mit mehr als 16-18 Kohlenstoffatomen,
mit der Maßgabe, dass der Anteil an ionischem Co-Tensid bezogen auf die Gesamtmenge Polyolester plus Co-Tensid vorzugsweise im Bereich von 0,1 - 50 Gew.-%, bevorzugt im Bereich von 0,2 - 40 Gew.-%, mehr bevorzugt im Bereich von 0,5 - 30 Gew.-%, noch mehr bevorzugt im Bereich von 1 - 25 Gew.-% liegt.

6. Verwendung nach einem der Ansprüche 1 bis 5, **dadurch gekennzeichnet, dass** die wässrigen Polymer-Dispersionen ausgewählt sind aus der Gruppe wässriger Polystyrol-Dispersionen, Polybutadien-Dispersionen Poly(meth)acrylat-Dispersionen Polyvinylester-Dispersionen und Polyurethan-Dispersionen, insbesondere Polyurethan-Dispersionen, wobei der Festkörper-Anteil dieser Dispersionen bevorzugt im Bereich von 20 - 70 Gew.-% liegt, mehr bevorzugt im Bereich von 25 - 65 Gew.-%.

7. Verwendung nach einem der Ansprüche 1 bis 6, **dadurch gekennzeichnet, dass** die Einsatzkonzentration der Polyolester in der wässrigen Polymer-Dispersion im Bereich von 0,2 - 15 Gew.-%, besonders bevorzugt von 0,4 -

10 Gew.-%, insbesondere von 0,5 - 7,5 Gew.-% liegt, bezogen auf das Gesamtgewicht der Dispersion.

**8.** Verwendung nach einem der Ansprüche 1 bis 7, **dadurch gekennzeichnet, dass** die Polyolester als Schaumhilfsmittel bzw. Schaumstabilisatoren zum Aufschäumen der wässrigen Polymer-Dispersionen dienen sowie als Trocknungshilfsmittel, Verlaufsadditiv, Netz-Mittel und/oder Rheologieadditiv.

**9.** Verfahren zur Herstellung einer porösen Polymerbeschichtung, vorzugsweise porösen Polyurethanbeschichtung unter Einsatz von Polyglycerinestern als Additive in wässrigen Polymer-Dispersionen umfassend die Schritte

a) Bereitstellen einer Mischung enthaltend eine wässrige Polymerdispersion, mindestens einen Polyglycerinester, sowie ggf. weitere Zusatzstoffe,
b) Aufschäumen der Mischung zu einem vorzugsweise homogenen, feinzelligen Schaum,
c) optional Zugabe mindestens eines Verdickers zur Einstellung der gewünschten Viskosität des Nasschaums,
d) Auftragen einer Beschichtung der geschäumten Polymer-Dispersion auf einen geeigneten Träger,
e) Trocknen der Beschichtung.

**10.** Poröse Polymerbeschichtung, vorzugsweise poröse Polyurethanbeschichtung, erhältlich durch den Einsatz von Polyglycerinester, als Additive in wässrigen Polymer-Dispersionen bei der Herstellung solcher Polymerbeschichtungen, bevorzugt erhältlich durch ein Verfahren nach Anspruch 9,
mit der Maßgabe, dass die poröse Polymerbeschichtung vorzugsweise eine mittlere Zellgröße kleiner 150 $\mu$m, bevorzugt kleiner 120 $\mu$m, insbesondere bevorzugt kleiner 100 $\mu$m, ganz besonders bevorzugt kleiner 75 $\mu$m aufweist.

**11.** Phosphorylierter Polyglycerin-Ester, erhältlich durch

(a) die Veresterung eines Polyglycerins mit mindestens einer Carbonsäure und
(b) nachfolgender Umsetzung mit einem Phosphorylierungsreagenz und
(c) optionaler, vorzugsweise obligatorischer, anschließender Neutralisation,

wobei das Phosphorylierungsreagenz insbesondere Phosphoroxychlorid, Phosphorpentoxid ($P_4O_{10}$), und/oder Polyphosphorsäure umfasst,
mit der Maßgabe, dass das zur Herstellung der Polyglycerinester eingesetzte Polyglycerin vorzugsweise eine OH-Zahl von 1829 bis 824, besonders bevorzugt von 1352 - 888, insbesondere bevorzugt von 1244 - 920 mg KOH/g aufweist.

**12.** Phosphorylierter Polyglycerin-Ester gemäß Anspruch 11, **dadurch gekennzeichnet, dass** es ein phosphorylierter und neutralisierter Polyglycerin-Ester, inbesondere ein phosphoryliertes und neutralisiertes Polyglycerin-Palmitat, ein phosphoryliertes und neutralisiertes Polyglycerin-Stearat oder eine Mischungen dieser Substanzen ist.

**13.** Phosphorylierter Polyglycerin-Ester gemäß Anspruch 11, welcher der allgemeinen Formel 1a entspricht:

$$M_aD_bT_c \qquad \text{Formel 1a}$$

wobei

M = $[C_3H_5(OR')_2O_{1/2}]$
D = $[C_3H_5(OR')_1O_{2/2}]$
T = $[C_3H_5O_{3/2}]$
a = 2 bis 3, insbesondere bevorzugt 2
b = größer 0 bis 5, insbesondere bevorzugt 1 bis 4,
c= 0

wobei die Reste R' unabhängig voneinander gleiche oder verschiedene Reste der Form $(R'''O)_2P(O)$-, R"-C(O)- oder H sind,
wobei R" ein einwertiger aliphatischer, gesättigter oder ungesättigter Kohlenwasserstoffrest mit 3 bis 39 C-Atomen, bevorzugt 7 bis 21, besonders bevorzugt mit 9 bis 17 Kohlenstoffatomen ist,
wobei mindestens ein Rest R' einem Rest der Form R"-C(O)- entspricht und wobei mindestens ein Rest R' einem Rest der Form $(R'''O)_2P(O)$- entspricht,

wobei die Reste R'" unabhängig voneinander Kationen, vorzugsweise $Na^+$, $K^+$ oder $NH_4^+$, oder Ammoniumionen von Mono-, Di- und Trialkylaminen, wobei es sich auch um funktionalisierte Alkylreste wie beispielsweise bei Amidaminen handeln kann, von Mono-, Di- und Trialkanolaminen, von Mono-, Di- und Triaminoalkylaminen oder H oder R""-O- sind,
wobei R"" ein einwertiger aliphatischer, gesättigter oder ungesättigter Kohlenwasserstoffrest mit 3 bis 39 C-Atomen, bevorzugt 7 bis 22, besonders bevorzugt mit 9 bis 18 Kohlenstoffatomen oder ein Polyolrest ist,
und/oder der allgemeinen Formel 2a entsprechen:

$M_xD_yT_z$ Formel 2a

wobei

M = 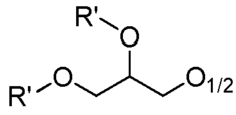

D = 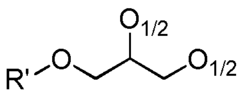 und/oder 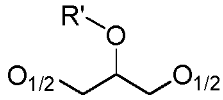

T = 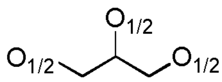

x = 2 bis 3, insbesondere bevorzugt 2,
y = größer 0 bis 5, insbesondere bevorzugt 1 bis 4,
z größer 0 bis 2, insbesondere bevorzugt 0

unter der Maßgabe, dass mindestens ein Rest R' einem Rest der Form R"-C(O)-entspricht und mindestens ein Rest R' einem Rest der Form $(R'''O)_2P(O)$-entspricht, weiterhin R' wie zuvor definiert,
und/oder der allgemeinen Formel 3a entsprechen:

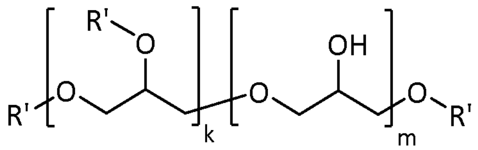

Formel 3a

wobei

k = 2 bis 3, insbesondere bevorzugt 2,
m = größer 0 bis 5, insbesondere bevorzugt 1 bis 3,

unter der Maßgabe, dass mindesten ein Rest R' einem Rest der Form R"-C(O)-entspricht und mindestens ein Rest R' einem Rest der Form $(R'''O)_2P(O)$-entspricht, weiterhin R' wie zuvor definiert, und dass die Summe k + m größer null ist und die Fragmente mit den Indices k und m statistisch verteilt sind.

## Claims

**1.** Use of polyol esters as additives in aqueous polymer dispersions for production of porous polymer coatings, preferably porous polyurethane coatings,
wherein the polyol esters are obtainable by the esterification of a polyglycerol with at least one carboxylic acid.

**2.** Use according to Claim 1, **characterized in that** the carboxylic acid corresponds to the general formula R-C(O)OH where R is a monovalent aliphatic saturated or unsaturated hydrocarbyl radical having 3 to 39 carbon atoms,

preferably 7 to 21 and more preferably 9 to 17 carbon atoms,
and preferred carboxylic acids being selected from butyric acid (butanoic acid), caproic acid (hexanoic acid), caprylic acid (octanoic acid), capric acid (decanoic acid), lauric acid (dodecanoic acid), myristic acid (tetradecanoic acid), palmitic acid (hexadecanoic acid), stearic acid (octadecanoic acid), arachidic acid (eicosanoic acid), behenic acid (docosanoic acid), lignoceric acid (tetracosanoic acid), palmitoleic acid ((Z)-9-hexadecenoic acid), oleic acid ((Z)-9-hexadecenoic acid), elaidic acid ((E)-9-octadecenoic acid), cis-vaccenic acid ((Z)-11-octadecenic acid), linoleic acid ((9Z,12Z)-9,12-octadecadienoic acid), alpha-linolenic acid ((9Z,12Z,15Z)-9,12,15-octadecatrienoic acid), gamma-linolenic acid ((6Z,9Z,12Z)-6,9,12-octadecatrienoic acid), di-homo-gamma-linolenic acid ((8Z,11Z,14Z)-8,11,14-eicosatrienoic acid), arachidonic acid ((5Z,8Z,11Z,14Z)-5,8,11,14-eicosatetraenoic acid), erucic acid ((Z)-13-docosenoic acid), nervonic acid ((Z)-15-tetracosenoic acid), ricinoleic acid, hydroxystearic acid and undecenylic acid, and also mixtures thereof, for example rapeseed oil acid, soya fatty acid, sunflower fatty acid, peanut fatty acid and/or tall oil fatty acid,
very particular preference being given to palmitic acid and stearic acid and mixtures of these two substances, and/or **in that** a polyfunctional di- and/or tricarboxylic acid is used, preferably aliphatic linear or branched di- and/or tricarboxylic acids having a chain length of 2 to 18 carbon atoms and/or dimer fatty acids that have been obtained by catalytic dimerization of unsaturated fatty acids having 12 to 22 carbon atoms,
and/or **in that** a mixture of carboxylic acid of the general formula R-C(O)OH, as specified above, and polyfunctional di- and/or tricarboxylic acid is used.

3. Use according to either of Claims 1 and 2, **characterized in that** the polyol esters used include those that are selected from the group of the polyglycerol esters which correspond to the general formula 1:

$M_aD_bT_c$ Formula 1

where

$M = [C_3H_5(OR')_2O_{1/2}]$
$D = [C_3H_5(OR')_1O_{2/2}]$
$T = [C_3H_5O_{3/2}]$
a = 2 to 3, especially preferably 2,
b = greater than 0 to 5, especially preferably 1 to 4,
c = 0,

where the R' radicals are independently identical or different radicals of the R"-C(O)- form or H,
where R" is a monovalent aliphatic saturated or unsaturated hydrocarbyl radical having 3 to 39 carbon atoms, preferably 7 to 21 and more preferably 9 to 17 carbon atoms,
where at least one R' radical corresponds to a radical of the R"-C(O)- form,
and/or correspond to the general formula 2:

$M_xD_yT_z$ Formula 2

where

M = 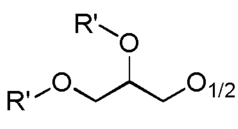

D = 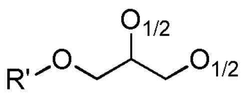 and/or 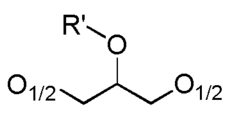

T = 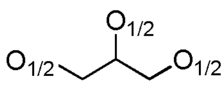

x = 2 to 3, especially preferably 2,

y = greater than 0 to 5, especially preferably 1 to 4,
z = greater than 0 to 2, especially preferably 0,
with the proviso that at least one R' radical is not hydrogen, still R' as defined above,
and/or correspond to the general formula 3:

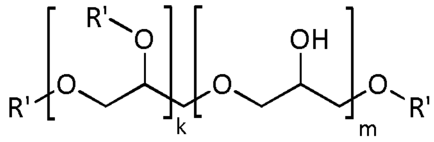

Formula 3

where

k = 2 to 3, especially preferably 2,
m = greater than 0 to 5, especially preferably 1 to 3,

with the proviso that at least one of the R' radicals is a radical of the R"-C(O)- form, still R' as defined above, and that the sum total of k + m is greater than zero and the fragments having the indices k and m are distributed statistically.

**4.** Use according to Claim 3, **characterized in that** the polyol esters of the formula 1, 2 and/or 3 have been phosphorylated, especially bear at least one $(R'''O)_2P(O)$- radical as the R' radical, where the R''' radicals are independently cations, preferably $Na^+$, $K^+$ or $NH_4^+$, or ammonium ions of mono-, di- and trialkylamines, which may also be functionalized alkyl radicals as, for example, in the case of amide amines, of mono-, di- and trialkanolamines, of mono-, di- and triaminoalkylamines, or H or R""-O-,
where R"" is a monovalent aliphatic saturated or unsaturated hydrocarbyl radical having 3 to 39 carbon atoms, preferably 7 to 22 and more preferably 9 to 18 carbon atoms or a polyol radical.

**5.** Use according to any of Claims 1 to 4, **characterized in that** the polyol esters are used in a blend with at least one ionic, preferably anionic, co-surfactant as additives in aqueous polymer dispersions,
preferred ionic co-surfactants being the ammonium and alkali metal salts of fatty acids, alkyl sulphates, alkyl ether sulphates, alkylsulphonates, alkylbenzenesulphonates, alkyl phosphates, alkyl sulphosuccinates, alkyl sulphosuccinamates and alkyl sarcosinates,
preference being given especially to alkyl sulphates having 12-20 carbon atoms, further preferably having 14-18 carbon atoms, even more preferably having more than 16-18 carbon atoms,
with the proviso that the proportion of ionic co-surfactant based on the total amount of polyol ester plus co-surfactant is preferably in the range of 0.1-50% by weight, preferably in the range of 0.2-40% by weight, more preferably in the range of 0.5-30% by weight, even more preferably in the range of 1-25% by weight.

**6.** Use according to any of Claims 1 to 5, **characterized in that** the aqueous polymer dispersions are selected from the group of aqueous polystyrene dispersions, polybutadiene dispersions, poly(meth)acrylate dispersions, polyvinyl ester dispersions and polyurethane dispersions, especially polyurethane dispersions, where the solids content of these dispersions is preferably in the range of 20-70% by weight, more preferably in the range of 25-65% by weight.

**7.** Use according to any of Claims 1 to 6, **characterized in that** the use concentration of the polyol esters in the aqueous polymer dispersion is in the range of 0.2-15% by weight, more preferably of 0.4-10% by weight, especially of 0.5-7.5% by weight, based on the total weight of the dispersion.

**8.** Use according to any of Claims 1 to 7, **characterized in that** the polyol esters serve as foaming aids or foam stabilizers for foaming of the aqueous polymer dispersions, and as a drying aid, levelling additive, wetting agent and/or rheology additive.

**9.** Process for producing a porous polymer coating, preferably porous polyurethane coating, using polyglycerol esters as additives in aqueous polymer dispersions, comprising the steps of

a) providing a mixture comprising an aqueous polymer dispersion, at least one polyglycerol ester, and optionally further additives,
b) foaming the mixture to give a preferably homogeneous, fine-cell foam,

c) optionally adding at least one thickener to establish the desired viscosity of the wet foam,
d) applying a coating of the foamed polymer dispersion to a suitable carrier,
e) drying the coating.

**10.** Porous polymer coating, preferably porous polyurethane coating, obtainable by the use of polyglycerol esters, as additives in aqueous polymer dispersions in the production of such polymer coatings, preferably obtainable by a process according to Claim 9, with the proviso that the porous polymer coating preferably has a mean cell size less than 150 $\mu$m, preferably less than 120 $\mu$m, especially preferably less than 100 $\mu$m, most preferably less than 75 $\mu$m.

**11.** Phosphorylated polyglycerol ester obtainable by

(a) the esterification of a polyglycerol with at least one carboxylic acid and
(b) subsequent reaction with a phosphorylating reagent and
(c) optional, preferably obligatory, subsequent neutralization,

where the phosphorylating reagent especially comprises phosphorus oxychloride, phosphorus pentoxide ($P_4O_{10}$) and/or polyphosphoric acid,
with the proviso that the polyglycerol used for preparation of the polyglycerol esters preferably has an OH number of 1829 to 824, more preferably of 1352-888 and especially preferably of 1244-920 mg KOH/g.

**12.** Phosphorylated polyglycerol ester according to Claim 11, **characterized in that** it is a phosphorylated and neutralized polyglycerol ester, especially a phosphorylated and neutralized polyglycerol palmitate, a phosphorylated and neutralized polyglycerol stearate or a mixture of these substances.

**13.** Phosphorylated polyglycerol ester according to Claim 11 which corresponds to the general formula 1a:

$$M_aD_bT_c \qquad \text{Formula 1a}$$

where

M = $[C_3H_5(OR')_2O_{1/2}]$
D = $[C_3H_5(OR')_1O_{2/2}]$
T = $[C_3H_5O_{3/2}]$
a = 2 to 3, especially preferably 2,
b = greater than 0 to 5, especially preferably 1 to 4,
c = 0,

where the R' radicals are independently identical or different radicals of the $(R'''O)_2P(O)$-, R''-C(O)- form or H,
where R'' is a monovalent aliphatic saturated or unsaturated hydrocarbyl radical having 3 to 39 carbon atoms, preferably 7 to 21 and more preferably 9 to 17 carbon atoms,
where at least one R' radical corresponds to a radical of the R''-C(O)- form and where at least one R' radical corresponds to a radical of the $(R'''O)_2P(O)$- form, where the R''' radicals are independently cations, preferably $Na^+$, $K^+$ or $NH_4^+$, or ammonium ions of mono-, di- and trialkylamines, which may also be functionalized alkyl radicals as, for example, in the case of amide amines, of mono-, di- and trialkanolamines, of mono-, di- and triaminoalkylamines, or H or R''''-O-,
where R'''' is a monovalent aliphatic saturated or unsaturated hydrocarbyl radical having 3 to 39 carbon atoms, preferably 7 to 22 and more preferably 9 to 18 carbon atoms or a polyol radical,
and/or correspond to the general formula 2a:

$$M_xD_yT_z \qquad \text{Formula 2a}$$

where

M = 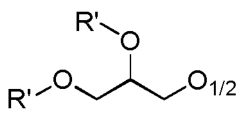

D = 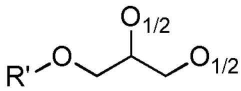 and/or 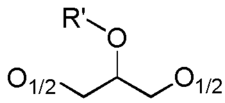

T = 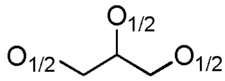

x = 2 to 3, especially preferably 2,
y = greater than 0 to 5, especially preferably 1 to 4,
z = greater than 0 to 2, especially preferably 0,

with the proviso that at least one R' radical corresponds to a radical of the R"-C(O)- form and at least one R' radical corresponds to a radical of the (R'''O)$_2$P(O)-form, still R' as defined above,
and/or correspond to the general formula 3a:

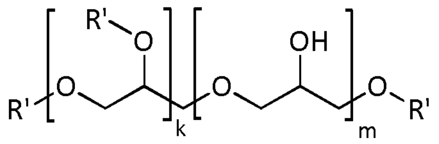

Formula 3a

where

k = 2 to 3, especially preferably 2,
m = greater than 0 to 5, especially preferably 1 to 3,

with the proviso that at least one R' radical corresponds to a radical of the R"-C(O)- form and at least one R' radical corresponds to a radical of the (R'''O)$_2$P(O)-form, still R' as defined above, and that the sum total of k + m is greater than zero and the fragments having the indices k and m are distributed statistically.

**Revendications**

1. Utilisation d'esters de polyol en tant qu'additifs dans des dispersions aqueuses de polymère pour la fabrication de revêtements polymères poreux, de préférence de revêtements de polyuréthane poreux,
les esters de polyol pouvant être obtenus par l'estérification d'une polyglycérine avec au moins un acide carboxylique.

2. Utilisation selon la revendication 1, **caractérisée en ce que** l'acide carboxylique correspond à la formule générale R-C(O)OH, dans laquelle R est un radical hydrocarboné monovalent aliphatique, saturé ou insaturé, contenant 3 à 39 atomes C, de préférence 7 à 21, de manière particulièrement préférée 9 à 17 atomes de carbone,
et des acides carboxyliques préférés sont choisis parmi l'acide butyrique (acide butanoïque), l'acide caproïque (acide hexanoïque), l'acide caprylique (acide octanoïque), l'acide caprique (acide décanoïque), l'acide laurique (acide dodécanoïque), l'acide myristique (acide tétradécanoïque), l'acide palmitique (acide hexadécanoïque), l'acide stéarique (acide octadécanoïque), l'acide arachique (acide eicosanoïque), l'acide béhénique (acide docosanoïque), l'acide lignocérique (acide tétracosanoïque), l'acide palmitoléique (acide (Z)-9-hexadécénoïque), l'acide oléique (acide (Z)-9-hexadécénoïque), l'acide élaïdique (acide (E)-9-octadécénoïque), l'acide cis-vaccénique (acide (Z)-11-octadécénoïque), l'acide linoléique (acide (9Z,12Z)-9,12-octadécadiénoïque), l'acide alpha-linolénique (acide (9Z,12Z,15Z)-9,12,15-octadécatriénoïque), l'acide gamma-linolénique (acide (6Z,9Z,12Z)-6,9,12-octadécatriénoïque), l'acide di-homo-gamma-linolénique (acide (8Z,11Z,14Z)-8,11,14-eicosatriénoïque), l'acide arachidonique (acide (5Z,8Z,11Z,14Z)-5,8,11,14-eicosatétraénoïque), l'acide érucique (acide (Z)-13-docosénoïque), l'acide nervonique (acide (Z)-15-tétracosénoïque), l'acide ricinoléique, l'acide hydroxystéarique et l'acide undécénylique, ainsi que leurs mélanges, tels que p. ex. l'acide d'huile de colza, l'acide gras de soja, l'acide gras de tournesol, l'acide gras d'arachide et/ou l'acide gras de tallol,
l'acide palmitique et l'acide stéarique, ainsi que les mélanges de ces deux substances étant tout particulièrement préférés,
et/ou **en ce qu'**un acide di- et/ou tricarboxylique polyfonctionnels est utilisé, de préférence des acides di- et/ou

tricarboxyliques aliphatiques, linéaires ou ramifiés, ayant une longueur de chaîne de 2 à 18 atomes C, et/ou des acides gras dimères, qui ont été obtenus par dimérisation catalytique d'acides gras insaturés contenant 12 à 22 atomes C,
et/ou **en ce qu'**un mélange d'acide carboxylique de la formule générale R-C(O)OH, tel qu'indiqué précédemment, et d'acide di- et/ou tricarboxylique polyfonctionnel est utilisé.

**3.** Utilisation selon l'une quelconque des revendications 1 ou 2, **caractérisée en ce que** les esters de polyol utilisés comprennent des esters de polyol qui sont choisis dans le groupe des esters de polyglycérine, qui correspondent à la formule générale 1 :

$M_aD_bT_c$ Formule 1

dans laquelle

M = $[C_3H_5(OR')_2O_{1/2}]$
D = $[C_3H_5(OR')_1O_{2/2}]$
T = $[C_3H_5O_{3/2}]$
a = 2 à 3, de manière notamment préférée 2,
b = plus de 0 à 5, de manière notamment préférée 1 à 4,
c = 0,

les radicaux R' étant indépendamment les uns des autres des radicaux identiques ou différents de la formule R"-C(O)- ou H,
R" étant un radical hydrocarboné monovalent aliphatique, saturé ou insaturé, contenant 3 à 39 atomes C, de préférence 7 à 21, de manière particulièrement préférée 9 à 17 atomes de carbone,
au moins un radical R' correspondant à un radical de la formule R"-C(O)-,
et/ou qui correspondent à la formule générale 2 :

$M_xD_yT_z$ Formule 2

dans laquelle

M = 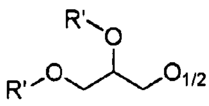

D = 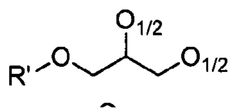 et/ou 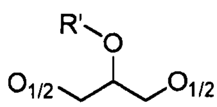

T = 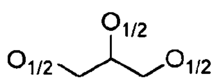

x = 2 à 3, de manière notamment préférée 2,
y = plus de 0 à 5, de manière notamment préférée 1 à 4,
z = plus de 0 à 2, de manière notamment préférée 0,

à condition qu'au moins un radical R' soit différent de l'hydrogène, R' étant par ailleurs tel que défini précédement, et/ou qui correspondent à la formule générale 3 :

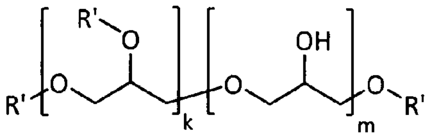

Formule 3

dans laquelle
k = 2 à 3, de manière notamment préférée 2,
m = plus de 0 à 5, de manière notamment préférée 1 à 3, à condition qu'au moins un des radicaux R' soit un radical de la formule R"-C(O)-, R' étant par ailleurs tel que défini précédemment, et que la somme k+m soit supérieure à zéro, et que les fragments munis des indices k et m soient répartis statistiquement.

4. Utilisation selon la revendication 3, **caractérisée en ce que** les esters de polyol de la formule 1, 2 et/ou 3 sont phosphorylés, notamment portent en tant que radical R' au moins un radical $(R'''O)_2P(O)$-, les radicaux R''' étant indépendamment les uns des autres des cations, de préférence $Na^+$, $K^+$ ou $NH_4^+$, ou des ions ammonium de mono-, di- et trialkylamines, ceux-ci pouvant également consister en des radicaux alkyle fonctionnalisés tels que par exemple dans des amide-amines, de mono-, di- et trialcanolamines, de mono-, di- et triaminoalkylamines ou H ou R''''-O-, R'''' étant un radical hydrocarboné monovalent aliphatique, saturé ou insaturé, contenant 3 à 39 atomes C, de préférence 7 à 22, de manière particulièrement préférée contenant 9 à 18 atomes de carbone, ou un radical polyol.

5. Utilisation selon l'une quelconque des revendications 1 à 4, **caractérisée en ce que** les esters de polyol sont utilisés en mélange avec au moins un co-tensioactif ionique, de préférence anionique, en tant qu'additifs dans des dispersions aqueuses de polymère, des co-tensioactifs ioniques préférés étant les sels d'ammonium et alcalins d'acides gras, d'alkylsulfates, d'alkyléther-sulfates, d'alkylsulfonates, d'alkylbenzène-sulfonates, d'alkylphosphates, d'alkylsulfosuccinates, d'alkyl-sulfosuccinamates et d'alkylsarcosinates,
les alkylsulfates contenant 12 à 20 atomes de carbone étant notamment préférés, de manière davantage préférée contenant 14 à 18 atomes de carbone, de manière encore davantage préférée contenant plus de 16 à 18 atomes de carbone,
à condition que la proportion de co-tensioactif ionique par rapport à la quantité totale d'ester de polyol plus co-tensioactif se situe de préférence dans la plage allant de 0,1 à 50 % en poids, de préférence dans la plage allant de 0,2 à 40 % en poids, de manière davantage préférée dans la plage allant de 0,5 à 30 % en poids, de manière encore davantage préférée dans la plage allant de 1 à 25 % en poids.

6. Utilisation selon l'une quelconque des revendications 1 à 5, **caractérisée en ce que** les dispersions aqueuses de polymère sont choisies dans le groupe constitué par les dispersions aqueuses de polystyrène, les dispersions de polybutadiène, les dispersions de poly(méth)acrylate, les dispersions de polyester de vinyle et les dispersions de polyuréthane, notamment les dispersions de polyuréthane, la proportion de solides de ces dispersions se situant de préférence dans la plage allant de 20 à 70 % en poids, de manière davantage préférée dans la plage allant de 25 à 65 % en poids.

7. Utilisation selon l'une quelconque des revendications 1 à 6, **caractérisée en ce que** la concentration utilisée des esters de polyol dans la dispersion aqueuse de polymère se situe dans la plage allant de 0,2 à 15 % en poids, de manière particulièrement préférée de 0,4 à 10 % en poids, notamment de 0,5 à 7,5 % en poids, par rapport au poids total de la dispersion.

8. Utilisation selon l'une quelconque des revendications 1 à 7, **caractérisée en ce que** les esters de polyol servent d'adjuvants de mousse ou de stabilisateurs de mousse pour le moussage des dispersions aqueuses de polymère, ainsi que d'adjuvant de séchage, d'additif de nivellement, d'agent mouillant et/ou d'additif de rhéologie.

9. Procédé de fabrication d'un revêtement polymère poreux, de préférence d'un revêtement de polyuréthane poreux, utilisant des esters de polyglycérine en tant qu'additifs dans des dispersions aqueuses de polymère, comprenant les étapes suivantes :

a) la préparation d'un mélange contenant une dispersion aqueuse de polymère, au moins un ester de polyglycérine, ainsi qu'éventuellement des additifs supplémentaires,
b) le moussage du mélange en une mousse à cellules fines, de préférence homogène,
c) éventuellement l'ajout d'au moins un épaississant pour l'ajustement de la viscosité souhaitée de la mousse

humide,
d) l'application d'un revêtement de la dispersion de polymère moussée sur un support approprié,
e) le séchage du revêtement.

**10.** Revêtement polymère poreux, de préférence revêtement de polyuréthane poreux, pouvant être obtenu en utilisant des esters de polyglycérine en tant qu'additifs dans des dispersions aqueuses de polymère lors de la fabrication de tels revêtements polymères, de préférence pouvant être obtenus par un procédé selon la revendication 9,
à condition que le revêtement polymère poreux présente de préférence une taille de cellule moyenne inférieure à 150 $\mu$m, de préférence inférieure à 120 $\mu$m, de manière notamment préférée inférieure à 100 $\mu$m, de manière tout particulièrement préférée inférieure à 75 $\mu$m.

**11.** Ester de polyglycérine phosphorylé, pouvant être obtenu par :

(a) l'estérification d'une polyglycérine avec au moins un acide carboxylique, et
(b) la mise en réaction ultérieure avec un réactif de phosphorylation, et
(c) éventuellement, de préférence obligatoirement, la neutralisation ultérieure,

le réactif de phosphorylation comprenant notamment de l'oxychlorure de phosphore, du pentoxyde de phosphore ($P_4O_{10}$) et/ou de l'acide polyphosphorique,
à condition que la polyglycérine utilisée pour la fabrication des esters de polyglycérine présente de préférence un indice OH de 1 829 à 824, de manière particulièrement préférée de 1 352 à 888, de manière notamment préférée de 1 244 à 920 mg de KOH/g.

**12.** Ester de polyglycérine phosphorylé selon la revendication 11, **caractérisé en ce qu'**il s'agit d'un ester de polyglycérine phosphorylé et neutralisé, notamment d'un palmitate de polyglycérine phosphorylé et neutralisé, d'un stéarate de polyglycérine phosphorylé et neutralisé, ou d'un mélange de ces substances.

**13.** Ester de polyglycérine phosphorylé selon la revendication 11, qui correspond à la formule générale 1a :

$$M_aD_bT_c \qquad \text{Formule 1a}$$

dans laquelle

M = $[C_3H_5(OR')_2O_{1/2}]$
D = $[C_3H_5(OR')_1O_{2/2}]$
T = $[C_3H_5O_{3/2}]$
a = 2 à 3, de manière notamment préférée 2,
b = plus de 0 à 5, de manière notamment préférée 1 à 4,
c = 0,

les radicaux R' étant indépendamment les uns des autres des radicaux identiques ou différents de la formule $(R''O)_2P(O)$-, R''-C(O)- ou H,
R'' étant un radical hydrocarboné monovalent aliphatique, saturé ou insaturé, contenant 3 à 39 atomes C, de préférence 7 à 21, de manière particulièrement préférée 9 à 17 atomes de carbone,
au moins un radical R' correspondant à un radical de la formule R''-C(O)-, et au moins un radical R' correspondant à un radical de la formule $(R'''O)_2P(O)$-, les radicaux R''' étant indépendamment les uns des autres des cations, de préférence $Na^+$, $K^+$ ou $NH_4^+$, ou des ions ammonium de mono-, di- et trialkylamines, ceux-ci pouvant également consister en des radicaux alkyle fonctionnalisés tels que par exemple dans des amide-amines, de mono-, di- et trialcanolamines, de mono-, di- et triaminoalkylamines ou H ou R''''-O-,
R'''' étant un radical hydrocarboné monovalent aliphatique, saturé ou insaturé, contenant 3 à 39 atomes C, de préférence 7 à 22, de manière particulièrement préférée contenant 9 à 18 atomes de carbone, ou un radical polyol, et/ou qui correspond à la formule générale 2a :

$$M_xD_yT_z \qquad \text{Formule 2a}$$

dans laquelle

M = 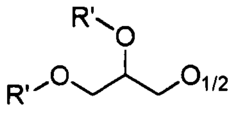

D = 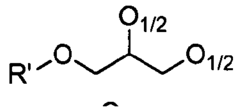 et/ou 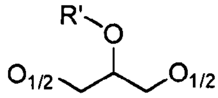

T = 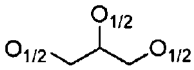

x = 2 à 3, de manière notamment préférée 2,
y = plus de 0 à 5, de manière notamment préférée 1 à 4,
z = plus de 0 à 2, de manière notamment préférée 0,

à condition qu'au moins un radical R' corresponde à un radical de la formule R"-C(O)-, et qu'au moins un radical R' corresponde à un radical de la formule $(R'''O)_2P(O)$-, R' étant par ailleurs tel que défini précédement, et/ou qui correspond à la formule générale 3a :

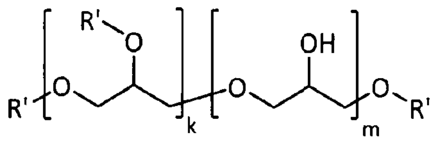

Formule 3a

dans laquelle

k = 2 à 3, de manière notamment préférée 2,
m = plus de 0 à 5, de manière notamment préférée 1 à 3,

à condition qu'au moins un radical R' corresponde à un radical de la formule R"-C(O)-, et qu'au moins un radical R' corresponde à un radical de la formule $(R'''O)_2P(O)$-, R' étant par ailleurs tel que défini précédemment, et que la somme k+m soit supérieure à zéro, et que les fragments munis des indices k et m soient répartis statistiquement.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20150284902 A1
- US 20060079635 A1


### In der Beschreibung aufgeführte Nicht-Patentliteratur


- Entsprechende Verfahren sind z.B. im Römpp - Chemie Lexikon. Thieme-Verlag, 1996
- Industrial Applications of Surfactants. II. Preparation and Industrial Applications of Phosphate Esters. Royal Society of chemistry, 1990
- **WALTER FUNG.** Coated and laminated Textiles. CR-Press, 2002